# EUROPÄISCHE PATENTANMELDUNG

(11) **EP 3 166 060 A1**
(43) Veröffentlichungstag der Anmeldung: **10.05.2017**
(21) Anmeldenummer: 16196285.7
(22) Anmeldetag: 28.10.2016
(51) Int. Cl.: G06Q 10/08, G06Q 50/32, G06Q 20/32

(54) **VEREINFACHTE ZUSTELLUNG VON SENDUNGEN MIT NOCH UNBEZAHLTEN WAREN**

(30) Priorität: 05.11.2015 DE 102015119004
(71) Anmelder: Deutsche Post AG, 53113 Bonn (DE)
(72) Erfinder: WIECHERS, Ralph, 53508 Mayschoß (DE)
(74) Vertreter: Cohausz & Florack

(57) **Zusammenfassung**

Offenbart wird u.a. ein erstes Verfahren (200), umfassend: Erhalten oder Erfassen erster Information durch einen Zusteller (4) oder ein Gerät (40) des Zustellers (4), wobei die erste Information zumindest folgendes umfasst: Zustellungszustimmungsinformation, aus der folgt oder ableitbar ist, dass eine Person (8) der Zustellung einer zumindest unter Verwendung der Zustellungszustimmungsinformation identifizierbaren Sendung (3) trotz Abwesenheit der Person (8) zustimmt, wobei die Sendung (3) eine Ware enthält, die im Falle der Zustellung bezahlt werden muss; Bezahlt-Information, aus der folgt oder ableitbar ist, dass eine Bezahlung einer Ware, die in einer zumindest unter Verwendung der Bezahlt-Information identifizierbaren Sendung (3) enthalten ist, erfolgt ist; oder Zahlungsinformation, mit der eine Bezahlung einer in einer Sendung (3) enthaltenen Ware zu Lasten einer Person (8) ohne weitere Beteiligung der Person (8) vorgenommen werden kann und darf; und Zustellen (203) der Sendung (3) oder Anzeigen (203) oder Ausgeben (203) einer zweiten Information, aus der folgt, dass die Sendung (3) zugestellt werden darf, wobei das Erhalten oder Erfassen der ersten Information notwendige Bedingung dafür ist, dass das Zustellen der Sendung (3) oder das Anzeigen oder Ausgeben der zweiten Information durchgeführt wird. Offenbart wird ferner ein zweites Verfahren (300), umfassend: Erhalten (301) oder Erzeugen (301) erster Information, wobei die erste Information zumindest folgendes umfasst: Zustellungszustimmungsinformation; Bezahlt-Information; oder Zahlungsinformation; und Bereitstellen (302) oder Kommunizieren (302) der ersten Information, wobei ein Erfassen oder Erhalten der bereitgestellten oder kommunizierten ersten Information durch einen Zusteller (4) oder ein Gerät (40) des Zustellers (4) notwendige Bedingung dafür ist, dass die Sendung (3) durch den Zusteller (4) zugestellt wird. Offenbart werden ferner eine Vorrichtung (40; 50) zur Ausführung und/oder Steuerung des ersten oder zweiten Verfahrens (200; 300), ein System (1) mit einer oder mehreren Vorrichtungen (40; 50) zur Ausführung und/oder Steuerung des ersten und/oder zweiten Verfahrens (200; 300) und ein Computerprogramm zur Ausführung und/oder Steuerung des ersten oder zweiten Verfahrens (200; 300) durch einen Prozessor (41; 51).

## Beschreibung

### Gebiet

Beispielhafte Ausführungsformen der Erfindung betreffen die Vereinfachung der Zustellung von Sendungen mit noch unbezahlten Waren, insbesondere von Nachnahme-Sendungen.

### Hintergrund

Neben Bezahlungsverfahren wie Kreditkartenzahlung, Zahlung auf Rechnung, per Überweisung oder per Lastschrift erfreut sich die Nachnahme im Versandhandel wachsender Beliebtheit. Bei der Bezahlung per Nachnahme wird üblicherweise bestellte Ware erst im Zeitpunkt der Zustellung der die Ware enthaltenden Sendung beim Empfänger (der beispielsweise der Käufer der Ware sein kann) bezahlt. Die Zahlung wird üblicherweise im Zeitpunkt der Zustellung der Sendung vom Empfänger an den Zusteller geleistet, der die Sendung mit der Ware erst bei vollständiger Entrichtung der Zahlung an den Empfänger aushändigt und die erhaltene Zahlung dann später an den Versender der Ware weiterleitet.

Die Zahlung per Nachnahme ist für den Käufer einer Ware insoweit vorteilhaft, als die Zahlung erst dann geleistet werden muss, wenn die Sendung tatsächlich erhalten wird, also das Risiko, dass trotz geleisteter Zahlung keine Ware erhalten wird, ausgeschlossen werden kann. Aus Sicht des Verkäufers besteht gegenüber Zahlungsvarianten wie Zahlung auf Rechnung oder Lastschrift der Vorteil, dass das Risiko, dass eine ausgelieferte Ware nicht bezahlt oder eine diesbezügliche Lastschrift vom Käufer widerrufen wird, nicht besteht.

### Zusammenfassung einiger beispielhafter Ausführungsformen der Erfindung

Bei der Zahlung per Nachnahme ist das insbesondere auf Barzahlung beruhende Kassieren durch den Zusteller im Zeitpunkt der Zustellung sowohl für den Zusteller als auch den Empfänger der Sendung zeitaufwändig und umständlich. Insbesondere muss der Empfänger dazu ggf. hohe Geldbeträge abgezählt bereithalten, in der Regel sogar in abgezählter Form. Darüber hinaus kann die Sendung üblicherweise nur dann zugestellt werden, wenn der Adressat zu Hause ist oder der Zusteller eine andere Person antrifft, beispielsweise einen Nachbarn des Adressaten, der allerdings nicht nur zur Entgegenahme der Sendung bereit sein muss, sondern auch vom Adressaten informiert sein muss, ob dieser die Sendung überhaupt erhalten möchte und dann entsprechend anstelle des Adressaten die Zahlung an den Zusteller leisten muss.

Die Zustellung von Nachnahme-Sendungen in Paketkästen, die ähnlich zu Briefkästen am Wohnsitz oder Geschäftssitz des Adressaten zur Aufnahme von Sendungen auch in Abwesenheit des Adressaten aufgestellt sind, aber über ein größeres Fassungsvermögen verfügen, ist gegenwärtig überhaupt nicht möglich.

Bei Zahlung von Sendungen per Nachnahme, die an eine Schließfachanlage, insbesondere eine Packstation, zur späteren Abholung durch den Adressaten zugestellt werden, ergibt sich der Nachteil, dass die Einheit (z.B. eine Packstation), in der der Aufbewahrungsraum untergebracht ist, entweder über Personal oder entsprechende technische Einrichtungen zur Entgegennahme von Zahlungen verfügen muss, damit der Adressat die Ware bei Abholung aus dem Aufbewahrungsraum bezahlen kann.

Auch bei Nachnahme-Sendungen, die an eine Aufbewahrungsstelle wie beispielsweise eine Einzelhandelsfiliale, eine Tankstelle, ein Restaurant, etc. zugestellt werden sollen und anschließend dort von dem Adressaten abgeholt werden können, ergeben sich Probleme, da zur Entlastung des Zustellers im Grunde bereits bei Zustellung der Sendung an die Aufbewahrungsstelle eine Bezahlung der Ware erfolgen müsste, was von der Aufbewahrungsstelle aus Aufwands- und/oder Risikoerwägungen allerdings nicht geleistet werden kann (es müsste dann zunächst die Bezahlung mit dem Zusteller abgewickelt und anschließend bei Abholung der Sendung erneut die Bezahlung mit dem Adressaten abgewickelt werden). Aus diesem Grund ist die Zustellung von Nachnahme-Sendungen an derartige Aufbewahrungsstellen gegenwärtig nicht möglich.

Es ist daher unter anderem eine Aufgabe der vorliegenden Erfindung, die Zustellung von Sendungen mit unbezahlten Waren, insbesondere von Nachnahme-Sendungen, zu vereinfachen. Dabei soll u.a. identifiziert werden, wie die Bezahlung der Ware im Zeitpunkt der Zustellung durch technische Maßnahmen beschleunigt oder entbehrlich gemacht werden kann, so dass auch keine Anwesenheit des Adressaten im Zeitpunkt der Zustellung mehr erforderlich ist.

Gemäß einem ersten beispielhaften Aspekt der Erfindung wird ein Verfahren offenbart, das folgendes umfasst:
- Erhalten oder Erfassen erster Information durch einen Zusteller oder ein Gerät des Zustellers, wobei die erste Information zumindest folgendes umfasst:
   - Zustellungszustimmungsinformation, aus der folgt oder ableitbar ist, dass eine Person der Zustellung einer zumindest unter Verwendung der Zustellungszustimmungsinformation identifizierbaren Sendung trotz Abwesenheit der Person zustimmt, wobei die Sendung eine Ware enthält, die im Falle der Zustellung bezahlt werden muss;
   - Bezahlt-Information, aus der folgt oder ableitbar ist, dass eine Bezahlung einer Ware, die in einer zumindest unter Verwendung der Bezahlt-Information identifizierbaren Sendung enthalten ist, erfolgt ist; oder
   - Zahlungsinformation, mit der eine Bezahlung einer in einer Sendung enthaltenen Ware zu Lasten einer Person ohne weitere Beteiligung der Person vorgenommen werden kann und darf; und
- Zustellen der Sendung oder Anzeigen oder Ausgeben einer zweiten Information, aus der folgt, dass die Sendung zugestellt werden darf, wobei das Erhalten oder Erfassen der ersten Information notwendige Bedingung dafür ist, dass das Zustellen der Sendung oder das Anzeigen oder Ausgeben der zweiten Information durchgeführt wird.

Gemäß einem zweiten beispielhaften Aspekt der Erfindung wird ein Verfahren offenbart, das folgendes umfasst:
- Erhalten oder Erzeugen erster Information, wobei die erste Information zumindest folgendes umfasst:
   - Zustellungszustimmungsinformation, aus der folgt oder ableitbar ist, dass eine Person der Zustellung einer zumindest unter Verwendung der Zustellungszustimmungsinformation identifizierbaren Sendung trotz Abwesenheit der Person zustimmt, wobei die Sendung eine Ware enthält, die im Falle der Zustellung bezahlt werden muss;
   - Bezahlt-Information, aus der folgt oder ableitbar ist, dass eine Bezahlung einer Ware, die in einer zumindest unter Verwendung der Bezahlt-Information identifizierbaren Sendung enthalten ist, erfolgt ist; oder
   - Zahlungsinformation, mit der eine Bezahlung einer in einer Sendung enthaltenen Ware zu Lasten einer Person ohne weitere Beteiligung der Person vorgenommen werden kann und darf; und
- Bereitstellen oder Kommunizieren der ersten Information, wobei ein Erfassen oder Erhalten der bereitgestellten oder kommunizierten ersten Information durch einen Zusteller oder ein Gerät des Zustellers notwendige Bedingung dafür ist, dass die Sendung durch den Zusteller zugestellt wird.

Die Verfahren gemäß dem ersten und zweiten Aspekt der Erfindung können beispielsweise jeweils von einem Menschen ausgeführt werden. Im Falle des Verfahrens gemäß dem ersten Aspekt der Erfindung kann es sich beispielsweise um einen Zusteller der Sendung handeln. Im Falle des Verfahrens gemäß dem zweiten Aspekt der Erfindung kann es sich beispielsweise um einen Adressaten der Sendung und/oder um eine Person handeln, die der Zustellung zustimmt, die Bezahlung der Ware vorgenommen hat oder zu deren Lasten die Bezahlung der Ware vorgenommen wird. Alternativ können das Verfahren gemäß dem ersten Aspekt der Erfindung und/oder das Verfahren gemäß dem zweiten Aspekt der Erfindung auch jeweils von einer oder mehreren Vorrichtungen ausgeführt werden. Das Verfahren gemäß dem zweiten Aspekt der Erfindung kann beispielsweise von einer Bereitstellungs- oder Kommunikationsentität ausgeführt werden, die menschlich oder nicht-menschlich (z.B. eine Vorrichtung) sein kann.

Für die Verfahren gemäß dem ersten und zweiten Aspekt der Erfindung wird des weiteren jeweils eine Vorrichtung offenbart (und nachfolgend als Vorrichtung gemäß dem ersten bzw. zweiten Aspekt der Erfindung bezeichnet), die zur Ausführung und/oder Steuerung des jeweiligen Verfahrens eingerichtet ist oder jeweilige Mittel zur Ausführung und/oder Steuerung der Schritte des jeweiligen Verfahrens umfasst. Dabei können entweder alle Schritte des jeweiligen Verfahrens gesteuert werden, oder alle Schritte des jeweiligen Verfahrens ausgeführt werden, oder ein oder mehrere Schritte gesteuert und ein oder mehrere Schritte ausgeführt werden. Ein oder mehrere der Mittel können auch durch die gleiche Einheit ausgeführt und/oder gesteuert werden. Beispielsweise können ein oder mehrere der Mittel durch einen oder mehrere Prozessoren gebildet sein.

Für die Verfahren gemäß dem ersten und zweiten Aspekt der Erfindung wird des weiteren jeweils eine Vorrichtung offenbart (und nachfolgend als Vorrichtung gemäß dem ersten bzw. zweiten Aspekt der Erfindung bezeichnet), die zumindest einen Prozessor und zumindest einen Speicher, der Programmcode beinhaltet, umfasst, wobei der Speicher und der Programmcode eingerichtet sind, mit dem zumindest einen Prozessor eine Vorrichtung (beispielsweise die Vorrichtung mit dem Prozessor und dem Speicher) dazu zu veranlassen, zumindest das jeweilige Verfahren auszuführen und/oder zu steuern. Dabei können entweder alle Schritte des jeweiligen Verfahrens gesteuert werden, oder alle Schritte des jeweiligen Verfahrens ausgeführt werden, oder ein oder mehrere Schritte gesteuert und ein oder mehrere Schritte ausgeführt werden.

Die Vorrichtung gemäß dem ersten Aspekt der Erfindung kann beispielsweise nicht zur Zustellung der Sendung eingerichtet sein, aber zum Anzeigen oder Ausgeben der zweiten Information.

Bei der Vorrichtung gemäß dem ersten Aspekt der Erfindung kann es sich beispielsweise um ein elektronisches Gerät, insbesondere ein tragbares elektronisches Gerät, handeln. Das Gerät kann beispielsweise das Gerät eines Zustellers sein, der die Sendung zuzustellen hat. Das Gerät kann beispielsweise zur Erfassung von Informationen von Sendungen, insbesondere durch optische und/oder funkbasierte Erfassung, eingerichtet sein. Die Informationen können im Falle der optischen Erfassung beispielsweise auf der Sendung oder auf einem Etikett der Sendung aufgedruckt sein und von der Sendung bzw. dem Etikett erfasst werden. Die Informationen können im Falle der funkbasierten Erfassung beispielsweise in einem mit der Sendung assoziierten (beispielsweise darin enthaltenen Speicher) gespeichert sein und aus diesem Speicher erfasst werden. Das Gerät kann beispielsweise ein Handscanner eines Zustellers sein, auf dem Empfänger von Sendungen den Empfang von Sendungen quittieren können.

Bei der Vorrichtung gemäß dem zweiten Aspekt der Erfindung kann es sich beispielsweise um eine Vorrichtung handeln, die sich am Ort der Zustellung der Sendung befindet. Unter dem Ort der Zustellung (oder dem Zustellungsort) wird vorliegend insbesondere die Position verstanden, an der die Zustellung der Sendung erfolgt. Diese Position ist insbesondere in der Lieferadresse der Sendung spezifiziert. Sie kann beispielsweise anhand einer postalischen Adresse (Name, Straße, Hausnummer und Wohnort) spezifiziert sein. Die Vorrichtung kann beispielsweise dort ortsfest installiert sein, beispielsweise als Teil einer Brief- und/oder Paketkastenanlage mit einem oder mehreren Fächern zur Aufnahme von Sendungen auch bei Abwesenheit des Adressaten (vom Zustellungsort im Zustellungszeitpunkt), eines Gebäudeautomatisierungs- oder -steuerungssystems, eines Zugangskontrollsystems für Gebäude oder Fahrzeuge, eines Türkommunikationssystems oder eines elektronisches Anzeigeschilds, oder als Vorrichtung, die mit einer dieser Anlagen oder Systeme operativ verbunden ist. Alternativ kann die Vorrichtung gemäß dem zweiten Aspekt der Erfindung zumindest zur Ermöglichung der Zustellung der Sendung am Ort der Zustellung platziert (etwa in einem Behälter, beispielsweise einem Brief- oder Paketkasten) oder installiert worden sein.

Bei der Vorrichtung gemäß dem zweiten Aspekt der Erfindung kann es sich alternativ um ein elektronisches Gerät einer Person (insbesondere des Adressaten der Sendung) handeln, die der Zustellung zustimmt, die Bezahlung der Ware vorgenommen hat oder zu deren Lasten die Bezahlung vorgenommen wird, beispielsweise in Form eines Mobiltelefons (beispielsweise Smartphones) oder eines Computers, insbesondere eines Tablet-, Laptop- oder Desktop-Computers. Die Vorrichtung kann im Zeitpunkt der Zustellung am Ort der Zustellung befindlich sein. Alternativ kann die Vorrichtung im Zeitpunkt der Zustellung nicht am Ort der Zustellung befindlich sein.

Alternativ kann die Vorrichtung gemäß dem zweiten Aspekt der Erfindung auch ein Server sein, der die erste Information erzeugt und dann an eine weitere Vorrichtung (beispielsweise an ein Gerät der Person (insbesondere des Adressaten der Sendung), oder an eine am Ort der Zustellung installierte oder zumindest temporär platzierte Vorrichtung) kommuniziert (insbesondere überträgt), beispielsweise damit die weitere Vorrichtung das Erfassen oder Erhalten der ersten Information durch den Zusteller oder ein Gerät des Zustellers ermöglichen kann oder mit der weiteren Vorrichtung das Erfassen oder Erhalten der ersten Information durch den Zusteller oder ein Gerät des Zustellers ermöglicht werden kann. Der Server kann beispielsweise im Back-End eines Zustellungsunternehmens integriert sein, das für die Zustellung der Sendung verantwortlich ist.

Für die Verfahren gemäß dem ersten und zweiten Aspekt der Erfindung wird des weiteren jeweils ein System offenbart (und nachfolgend als System gemäß dem ersten bzw. zweiten Aspekt der Erfindung bezeichnet), das eine oder mehrere Vorrichtungen umfasst, die eingerichtet sind zur Ausführung und/oder Steuerung des jeweiligen Verfahrens oder Mittel zur Ausführung und/oder Steuerung der Schritte des jeweiligen Verfahrens aufweisen. Dabei können entweder alle Schritte des jeweiligen Verfahrens gesteuert werden, oder alle Schritte des jeweiligen Verfahrens ausgeführt werden, oder ein oder mehrere Schritte gesteuert und ein oder mehrere Schritte ausgeführt werden.

Ferner wird ein System offenbart, das zumindest eine Vorrichtung gemäß dem ersten Aspekt der Erfindung und eine Vorrichtung gemäß dem zweiten Aspekt der Erfindung umfasst. In diesem System wird insbesondere die von der Vorrichtung gemäß dem zweiten Aspekt der Erfindung bereitgestellte oder kommunizierte Information von der Vorrichtung gemäß dem ersten Aspekt der Erfindung erhalten oder erfasst.

Für die Verfahren gemäß dem ersten und zweiten Aspekt der Erfindung wird des weiteren jeweils ein Computerprogramm offenbart (und nachfolgend als Computerprogramm gemäß dem ersten bzw. zweiten Aspekt der Erfindung bezeichnet), das Programmanweisungen umfasst, die einen Prozessor zur Ausführung und/oder Steuerung des jeweiligen Verfahrens veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des jeweiligen Verfahrens gesteuert werden, oder alle Schritte des jeweiligen Verfahrens ausgeführt werden, oder ein oder mehrere Schritte gesteuert und ein oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium ist beispielsweise gegenständlich, also greifbar, und/oder nicht-transitorisch.

Beispielhafte Ausführungsformen aller Aspekte der vorliegenden Erfindung weisen einzelne, mehrere oder alle der nachfolgend beschriebenen Eigenschaften auf.

In beispielhaften Ausführungsformen der Erfindung ist das Erhalten oder Erfassen von erster Information notwendige Bedingung dafür, dass die Sendung durch den Zusteller zugestellt wird oder dass zweite Information, aus der folgt, dass die Sendung zugestellt werden darf, angezeigt oder ausgegeben wird (insbesondere durch ein Gerät des Zustellers, wodurch der Zusteller dann informiert und autorisiert ist, die Sendung zuzustellen). Die erste Information kann dabei unterschiedliche Ausprägungen haben.

Falls die erste Information beispielsweise Zustellungszustimmungsinformation oder Bezahlt-Information umfasst, kann beispielsweise kein Bezahlungsprozess im Zeitpunkt der Zustellung erforderlich sein und der Zustellungsprozess damit effizienter und schneller gestaltet werden. Auch die Anwesenheit des Adressaten der Sendung am Ort der Zustellung im Zeitpunkt der Zustellung kann dann beispielsweise entbehrlich sein.

Falls die erste Information Zustellungszustimmungsinformation umfasst, wird dem Zusteller oder dessen Gerät dadurch signalisiert, dass auch bei Abwesenheit der Person (vom Zustellungsort im Zustellungszeitpunkt), die die in der Sendung enthaltene Ware zu bezahlen hat, eine Zustellung der Sendung erfolgen kann. Die Person ist beispielsweise der Adressat der Sendung, ist also beispielsweise in einer Lieferadresse der Sendung genannt und/oder anderweitig mit der Sendung assoziiert. Der Adressat der Sendung wird in dieser Spezifikation insbesondere als diejenige Person verstanden, für die eine Sendung bestimmt ist, also insbesondere auch dann, wenn die Sendung von einem Zusteller an eine andere Empfangsentität zugestellt wird und anschließend noch ein Transfer der Sendung von der Empfangsentität zum Adressat erfolgen muss.

Die Zustellung kann dann beispielsweise auch an einen Nachbarn der Person erfolgen, oder in einen Brief- und/oder Paketkasten der Person (oder in/an einen anderen Ort im Verfügungsbereich der Person, beispielsweise ein Fahrzeug, eine Garage, ein Gartenhaus, eine Terrasse der Person), oder in einen Aufbewahrungsraum (z.B. eine Packstation), aus der die Sendung dann später insbesondere von der Person abgeholt werden kann, oder an eine Aufbewahrungsstelle (z.B. einen Paketshop, eine Einzelhandelsfiliale, eine Tankstelle, ein Restaurant, etc.), von der die Sendung dann später insbesondere von der Person abgeholt werden kann. Eine menschliche oder gegenständliche Entität, in/an die die Zustellung der Sendung erfolgt, wird im folgenden auch als Empfangsentität bezeichnet.

Die Ware wird dann beispielsweise nach der Zustellung der Sendung von der Person bezahlt, beispielsweise zunächst an ein Zustellungsunternehmen (oder ein damit assoziiertes Unternehmen), das für die Zustellung der Sendung verantwortlich ist und als Treuhänder oder Inkasso-Dienstleister für den Verkäufer der Ware (der beispielsweise auch der Versender der Sendung ist) agiert. Beispielsweise wird der Betrag für die in der Sendung enthaltene Ware nach Zustellung ohne weitere Beteiligung oder Aktion der Person von einem Konto der Person abgebucht, beispielsweise einem Konto der Person bei dem Zustellungsunternehmen, das für die Zustellung der Sendung verantwortlich ist, oder von einem andern Konto, für das die Person bei dem Zustellungsunternehmen Informationen (beispielsweise Kreditkarteninformationen, Lastschriftinformationen oder Login-Informationen) hinterlegt hat. Die Zustellungszustimmungsinformation drückt dann nicht nur die Zustimmung der Person aus, dass die Zustellung auch in Abwesenheit der Person (vom Zustellungsort im Zustellungszeitpunkt) erfolgen kann, sondern beinhaltet auch die Zustimmung der Person zur Vornahme der Bezahlung der Sendung zu Lasten der Person.

Das bisher übliche Erfordernis, dass die Bezahlung der Ware bei einer Nachnahme-Sendung im Zeitpunkt der Zustellung (und am Ort der Zustellung) der Sendung erfolgen muss, wird hier also aufgegeben. Aus Sicht des Verkäufers der Ware wird das Risiko des Zahlungsausfalls beispielsweise nicht erhöht, wenn das Zustellungsunternehmen das Risiko für Zahlungsausfälle übernimmt. Um seinerseits das Risiko eines Zahlungsausfalls zu reduzieren, kann das Zustellungsunternehmen beispielsweise nur solchen Personen, die als vertrauenswürdig (beispielsweise aufgrund ihrer bisherigen Verhaltensweise, beispielsweise ihrem bisherigen Bezahlverhalten) eingestuft werden, ermöglichen, mittels der ersten Information zu signalisieren, dass eine Zustellung der Sendung auch bei Abwesenheit der Person (vom Zustellungsort im Zustellungszeitpunkt) erfolgen kann. Dies kann beispielsweise dadurch erfolgen, dass bei eine Anfrage der Person nach der ersten Information an einem Server festgestellt wird, ob die anfragende Person als vertrauenswürdig eingestuft wird, und nur bei positiver Feststellung die erste Information an die anfragende Person (oder an ein Gerät der anfragenden Person) ausgegeben wird. Zusätzlich zu der ersten Information kann auch weitere Information erfasst oder erhalten werden, aus der folgt oder ableitbar ist, in welcher Form der Zustellung in Abwesenheit der Person (vom Zustellungsort im Zustellungszeitpunkt) zugestimmt wird, also beispielsweise in/an welche Orte/Räume und/oder an welche Personen. Dadurch kann die zustimmende Person ihr Risiko reduzieren, dass die Sendung bei Abwesenheit der Person (vom Zustellungsort im Zustellungszeitpunkt) an nicht vertrauenswürdige Personen oder an unsichere Orte/Räume zugestellt wird.

Falls die erste Information Bezahlt-Information umfasst, wird dem Zusteller oder dessen Gerät dadurch signalisiert, dass eine Bezahlung der Ware, die in der Sendung enthalten ist, bereits erfolgt ist. Der Zusteller ist dadurch informiert und autorisiert, die Sendung ohne Durchführung eines Bezahlvorgangs durchzuführen. Die Zustellung der Sendung kann, falls Bezahlt-Information erfasst oder erhalten wurde, bei Anwesenheit des Adressaten der Sendung (der beispielsweise die Person sein kann, die die Bezahlung der Ware vorgenommen hat, oder eine andere Person) erfolgen, oder bei Abwesenheit des Adressaten (vom Zustellungsort im Zustellungszeitpunkt). Zusätzlich zu der ersten Information kann auch weitere Information erfasst oder erhalten werden, aus der folgt oder ableitbar ist, ob die Person, die die Ware bezahlt hat, der Zustellung der Sendung auch bei Abwesenheit (vom Zustellungsort im Zustellungszeitpunkt) des Adressaten (der beispielsweise die Person sein kann, die die Bezahlung der Ware vorgenommen hat, oder eine andere Person) zustimmt und/oder in/an welche Orte/Räume und/oder an welche Personen die Zustellung bei Abwesenheit des Adressaten (vom Zustellungsort im Zustellungszeitpunkt) erfolgen darf. Dadurch kann die Person ihr Risiko reduzieren, dass die Sendung bei Abwesenheit der Person (vom Zustellungsort im Zustellungszeitpunkt) an nicht vertrauenswürdige Personen oder an unsichere Orte/Räume zugestellt wird.

Falls die erste Information Zahlungsinformation umfasst, kann die Bezahlung der Ware mit dieser Zahlungsinformation ohne weitere Beteiligung der Person ausgeführt werden. Es wird dadurch insbesondere möglich, die Zustellung der Sendung auch bei Abwesenheit der Person (vom Zustellungsort im Zustellungszeitpunkt) vorzunehmen, da nach dem Erhalten oder dem Erfassen der ersten Information keine weitere Beteiligung der Person erforderlich ist. Die erste Information kann also beispielsweise am Ort der Zustellung der Sendung für den Zusteller oder dessen Gerät erfassbar bereitgestellt werden. Die Zahlungsinformation kann beispielsweise vom Zusteller oder dessen Gerät zur Vornahme der Zahlung, insbesondere unter Verwendung eines Online-Banking-Verfahrens, eingesetzt werden. Beispielsweise kommuniziert das Gerät des Zustellers dabei mit einem Server einer Bank oder eines Kreditkartenunternehmens, um die Bezahlung vorzunehmen. Eine von dem Gerät des Zustellers erhaltene Bestätigung über die erfolgte Zahlung dient dem Zusteller dann beispielsweise als Autorisierung zur Zustellung der Sendung. Insbesondere unterbleibt die Zustellung der Sendung also beispielsweise, falls von dem Gerät des Zustellers keine Bestätigung über die Bezahlung der Sendung erhalten wird, beispielsweise weil die Zahlungsinformationen inkorrekt und/oder weil die Bezahlung aufgrund mangelnder Deckung oder mangelnden Zahlungsrahmens des Kontos der Person nicht vorgenommen werden konnte, und die Person bei der Zustellung nicht anwesend ist, so dass die Bezahlung nicht in bar durch die Person gegenüber dem Zusteller vorgenommen werden kann. Eine erfolgreich verlaufene Prüfung der Korrektheit der Zahlungsinformationen und/oder einer ausreichenden Deckung oder eines ausreichenden Zahlungsrahmens eines in den Zahlungsinformationen angegebenen Kontos oder ein erfolgreich abgeschlossener Bezahlungsvorgang für die Ware unter Verwendung der Zahlungsinformationen kann beispielsweise eine weitere notwendige Voraussetzung für das Zustellen der Sendung oder das Anzeigen oder Ausgeben der zweiten Information sein. Die Zahlungsinformation kann beispielsweise Kreditkarteninformation der Person oder Lastschriftinformationen (z.B. Bankleitzahl und Kontonummer oder eine Kombination davon, und ggf. die Höhe des einzuziehenden Betrags) umfassen. Alternativ können auch anderweitige Informationen, die eine Bezahlung der Ware ohne weitere Beteiligung der Person ermöglichen, in der Zahlungsinformation umfasst sein, beispielsweise Pre-Paid-Codes oder ähnliches. Beispielsweise kann die Zahlungsinformation zum Ausdruck bringen, dass die Person der Belastung eines bei einem Zustellungsunternehmens, das für die Zustellung der Sendung verantwortlich ist, geführten Kontos zustimmt. Beispielsweise wird die erste Information mit solcher Zahlungsinformation von einer Anwendung, die auf einem Gerät der Person installiert ist, erzeugt. Die erste Information kann dann beispielsweise mit Prüfinformation versehen sein, die es dem Zusteller oder dem Gerät des Zustellers ermöglichen, die Authentizität und/oder Integrität zumindest eines Teils der ersten Information (beispielsweise zumindest der Zahlungsinformationen) zu prüfen, insbesondere ohne dazu Kontakt zu einem Server aufbauen zu müssen. Die zur Prüfung der Prüfinformation erforderlichen kryptographischen Informationen (z.B. ein Schlüssel zum Prüfen einer als Signatur ausgebildeten Prüfinformation oder zum Prüfen einer als Nachrichtenauthentifizierungscode ausgebildeten Prüfinformation) können dazu beispielsweise auf dem Gerät des Zustellers gespeichert sein.

Die erste Information ist dem Zusteller oder dessen Gerät beispielsweise erst dann zugänglich, wenn er oder es sich gegenüber einer Vorrichtung, die die erste Information bereitstellt oder kommuniziert, erfolgreich authentisiert hat. Dies dient dem Schutz der Zahlungsinformation der Person vor unberechtigtem Zugriff durch Dritte. Beispielsweise kann die erste Information auf einer Anzeigeeinheit der Vorrichtung erscheinen, wenn sich der Zusteller gegenüber der ersten Vorrichtung authentisiert hat. Diese Authentisierung kann im Rahmen der Zustellung beispielsweise ohnehin erforderlich sein. Die angezeigte Information kann dann vom Zusteller oder dessen Gerät (beispielsweise nach optischer Erfassung) zur Vornahme der Zahlung genutzt werden. Nach vom Zusteller oder dessen Gerät erhaltener Bestätigung der Bezahlung kann dann die Zustellung der Sendung erfolgen. Die Vorrichtung ist beispielsweise Teil einer Brief- und/oder Paketkastenanlage mit einem oder mehreren Fächern zur Aufnahme von Sendungen auch bei Abwesenheit des Adressaten, eines Gebäudeautomatisierungs- oder -steuerungssystems, eines Zugangskontrollsystems für Gebäude oder Fahrzeuge oder eines Türkommunikationssystems, oder mit einer dieser Anlagen oder Systeme operativ verbunden.

In beispielhaften Ausführungsformen der Erfindung kann daher im Zustellungszeitpunkt und am Zustellungsort gänzlich auf die Vornahme eines Bezahlvorgangs verzichtet werden (beispielsweise wenn die erste Information die Zustellungszustimmungsinformation oder die Bezahlt-Information umfasst) oder dieser zumindest effizient und bargeldlos abgewickelt werden (beispielsweise wenn die erste Information die Zahlungsinformation umfasst). Insbesondere ist es möglich, die Zustellung der Sendung auch bei Abwesenheit der Person (vom Zustellungsort im Zustellungszeitpunkt) dennoch vorzunehmen, insbesondere unabhängig davon, in welcher Form die Zustellung an eine Empfangsentität erfolgt, beispielsweise in eine Brief- und/oder Paketkastenanlage (insbesondere am Wohnsitz oder Geschäftssitz der Person), in einen Aufbewahrungsraum (z.B. eine Packstation), an eine Aufbewahrungsstelle (z.B. eine Einzelhandelsfiliale) oder an einen Nachbarn der Person. Dazu kann die Person dafür sorgen, dass die erste Information, insbesondere im Zustellungszeitpunkt am Zustellungsort, von dem Zusteller oder dessen Gerät erfassbar oder erhaltbar ist. Vorteilhaft wird diese Erfassbarkeit bzw. Erhaltbarkeit dadurch gewährleistet, dass die erste Information einer Vorrichtung, die zumindest im Zeitpunkt der Zustellung am Ort der Zustellung vorhanden ist, zur Verfügung steht und von dieser dem Zusteller oder dessen Gerät bereitgestellt oder an diese kommuniziert werden kann. Vorteilhaft kann die Information dann vom Zusteller oder dessen Gerät im Zeitpunkt der Zustellung am Ort der Zustellung erhalten oder erfasst werden, ohne dass das Gerät des Zustellers dazu mit einem Server kommunizieren muss, es ist also insbesondere keine Funkverbindung zu dem Server erforderlich. Der Adressat der Sendung hat dennoch bis kurz vor Zustellung der Sendung Zeit, für die Bereitstellung/Kommunikation der ersten Information am Ort der Zustellung zu sorgen. Alternativ kann die erste Information dem Zusteller oder dessen Gerät auch vor der Zustellung bereitgestellt oder an diese/diesen kommuniziert werden, insbesondere auf Veranlassung der Person.

Die erhaltene oder erfasste erste Information kann in beispielhaften Ausführungsformen der Erfindung als Quittung dafür dienen, dass der Zusteller tatsächlich am Ort der Zustellung war. Die erste Information ist dabei beispielsweise nur am Ort der Zustellung erfassbar oder erhaltbar, beispielsweise weil sie von einer am Ort der Zustellung installierten oder zumindest für den Zeitpunkt der Zustellung dort platzierten Vorrichtung bereitgestellt oder - insbesondere mit beschränkter Reichweite (z.B. Funkreichweite bei drahtloser Kommunikation) - kommuniziert wird.

In beispielhaften Ausführungsformen aller Aspekte der Erfindung wird die erste Information von oder an einer ersten Vorrichtung bereitgestellt und durch das Gerät des Zustellers erfasst. Bei der ersten Vorrichtung kann es sich beispielsweise um eine Vorrichtung gemäß dem zweiten Aspekt der Erfindung handeln. Die erste Vorrichtung kann beispielsweise zur Anzeige der ersten Information eingerichtet sein. Die erste Information wird dann insbesondere optisch erfasst. Die optische Erfassung kann auch Zeichenerkennung und/oder Decodierung codierter Information (beispielsweise von Barcodes, die die erste Information repräsentieren) umfassen. Die Anzeige der ersten Informationen kann beispielsweise nur nach erfolgreicher Authentisierung des Zustellers oder dessen Geräts gegenüber der ersten Vorrichtung oder einer mit der ersten Vorrichtung operativ verbundenen anderen Vorrichtung erfolgen. Die Anzeige der ersten Information kann beispielsweise auf einen vordefinierten Zeitraum begrenzt sein, insbesondere um Energie zu sparen und/oder die Ausspähung dieser Informationen zu erschweren.

In beispielhaften Ausführungsformen aller Aspekte der Erfindung wird die erste Information von einer ersten Vorrichtung kommuniziert und von dem Gerät des Zustellers erhalten. Bei der ersten Vorrichtung kann es sich beispielsweise um eine Vorrichtung gemäß dem zweiten Aspekt der Erfindung handeln. Das Kommunizieren kann beispielsweise auf drahtloser Funkübertragung beruhen, insbesondere auf Nahbereichs-Funkkommunikation. Die Nahbereichs-Funkkommunikation kann beispielsweise eine maximal mögliche Entfernung der beiden Kommunikationsparteien (Gerät des Zustellers und erste Vorrichtung) von weniger als 100 m, 50 m, 10 m, 5 m, 2 m oder 1 m erlauben. Die Funkkommunikation (insbesondere die Nahbereichs-Funkkommunikation) kann beispielsweise auf Bluetooth-Kommunikation, Near Field Communication (NFC) oder Wireless Local Area Network (WLAN) Kommunikation, um nur ein paar Beispiele zu nennen, beruhen. Bei der Nahbereichs-Funkkommunikation kann insbesondere vorteilhaft die Notwendigkeit entfallen, dass zumindest eine der beiden Kommunikationsparteien vor Aufbau der Kommunikation die Kommunikationsadresse der anderen Kommunikationspartei kennen muss. Beispielsweise kann eine Kommunikation zum Erhalten der ersten Information zwischen dem Gerät des Zustellers und der ersten Vorrichtung erfolgen, ohne dass eine Kommunikationsadresse der ersten Vorrichtung im Gerät des Zustellers oder eine Kommunikationsadresse des Geräts des Zustellers in der ersten Vorrichtung bekannt sein müsste. Dies ist insbesondere gegenüber einer auf Mobiltelefonie beruhenden Kommunikation zwischen der ersten Vorrichtung und dem Gerät des Zustellers, die eine Kenntnis der Mobiltelefonnummer der anzurufenden Kommunikationspartei voraussetzt, von erheblichem Vorteil.

Die erste Vorrichtung kann sich bei den beiden zuvor beschriebenen Ausführungsformen an demjenigen Ort befinden, an dem die Zustellung der Sendung erfolgt. Das Erhalten oder Erfassen der ersten Information kann dann beispielsweise am Ort der Zustellung der Sendung oder in vordefinierter Nähe zum Ort der Zustellung der Sendung (die beispielsweise durch die Funkreichweite eines Senders am Ort der Zustellung vordefiniert ist) stattfinden, also beispielsweise an der Lieferadresse der Sendung, beispielsweise beruhend auf Nahbereichs-Funkkommunikation oder auf optischer Erfassung von Information. Dann ist vorteilhaft das Erhalten oder Erfassen der ersten Information auch noch im Zeitpunkt der Zustellung möglich, ohne dass das Gerät des Zustellers mit einem Server (von dem die erste Information alternativ erhalten werden könnte) in Verbindung stehen muss oder überhaupt zur mobilen Kommunikation mit dem Server eingerichtet sein muss. Dies ist insbesondere dann vorteilhaft, wenn die Person sich erst kurz vor der Zustellung der Sendung entscheidet (etwa in Reaktion auf eine diesbezügliche Mitteilung des Zustellungsunternehmens an die Person), die Zustimmung zur Zustellung der Sendung auch bei Abwesenheit der Person zu erklären, die Bezahlung vorzunehmen oder die Zahlungsinformation bereitzustellen. Die erste Vorrichtung kann am Ort der Zustellung beispielsweise fest installiert oder zumindest im Zeitpunkt der Zustellung am Ort der Zustellung platziert werden.

In beispielhaften Ausführungsformen aller Aspekte der Erfindung ist die erste Vorrichtung Teil einer zweiten Vorrichtung oder operativ mit der zweiten Vorrichtung verbunden, und die zweite Vorrichtung ist eine Brief- und/oder Paketkastenanlage mit einem oder mehreren Fächern zur Aufnahme von Sendungen auch bei Abwesenheit des Adressaten, ein Gebäudeautomatisierungs- oder -steuerungssystem, ein Zugangskontrollsystem für Gebäude oder Fahrzeuge, ein Türkommunikationssystem oder ein elektronisches Anzeigeschild. Die zweite Vorrichtung ist beispielsweise fest und dauerhaft am Ort der Zustellung der Sendung installiert. Die Kernfunktionalität der zweiten Vorrichtung ist insbesondere nicht die Übermittlung von Information an einen Zusteller oder zumindest nicht von Information betreffend die Zustellung von Sendungen mit nicht bezahlten Waren bzw. die Bezahlung derartiger Waren. Gemäß dem vorliegenden Ausführungsbeispiel wird die Funktionalität der zweiten Vorrichtung allerdings dahingehend erweitert, dass die erste Vorrichtung, die die erste Information bereitstellt oder kommuniziert, als Teil der zweiten Vorrichtung vorgesehen wird oder mit der zweiten Vorrichtung operativ verbunden wird (so dass beispielsweise Austausch von Nutz- und/oder Steuerdaten zwischen erster und zweiter Vorrichtung möglich ist).

In beispielhaften Ausführungsformen aller Aspekte der Erfindung wird die erste Information von einer dritten Vorrichtung, insbesondere einem Server oder einem Gerät einer Person, für die die Sendung bestimmt ist, erzeugt und mittelbar oder unmittelbar (z.B. über eine drahtgebundene oder zumindest teilweise drahtlose Verbindung) an die erste Vorrichtung oder an eine zweite Vorrichtung, die mit der ersten Vorrichtung operativ verbunden ist, übertragen. Der Server kann beispielsweise ein Server des Zustellungsunternehmens sein, das für die Zustellung der Sendung verantwortlich ist. Bei der Erzeugung können beispielsweise kryptographische Informationen, beispielsweise ein geheimer (z.B. nur dem Server bekannter) Schlüssel (z.B. ein Advanced Encryption Standard (AES) Schlüssel) und/oder ein geheimes (z.B. nur dem Server bekanntes) Verfahren eingesetzt werden, die es ermöglichen, dass ein Zusteller oder ein Gerät des Zustellers bei oder nach dem Erhalten oder Erfassen der ersten Information die Authentizität und/oder Integrität zumindest eines Teils der ersten Information prüfen kann (beispielsweise beruhend auf einem öffentlichen Schlüssel, der zu dem geheimen Schlüssel korrespondiert (z.B. als asymmetrisches Schlüsselpaar, insbesondere als Schlüsselpaar nach dem Rivest-Shamir-Adlemann (RSA) Verfahren), oder beruhend auf einer Kopie des geheimen Schlüssels). Die Erzeugung der ersten Information durch den Server kann beispielsweise durch die Person ausgelöst werden, beispielsweise durch Interaktion mit einer Webseite, die eine Schnittstelle zum Server darstellt, oder durch Interaktion mit einer auf dem Gerät der Person installierten Anwendung, die mit dem Server kommuniziert. Wenn die erste Information auf dem Gerät der Person erzeugt wird, kann dies beispielsweise durch eine auf dem Gerät installierte Anwendung erfolgen, mit der die Person interagiert. In der Anwendung können die oben bereits beschriebenen kryptographischen Informationen gespeichert sein (insbesondere in einem geschützten Speicherbereich) oder für die Erzeugung der ersten Information von einem Server (insbesondere des Zustellungsunternehmens) bezogen und nach der Erzeugung wieder von dem Gerät gelöscht werden. Die Übertragung der ersten Information vom Gerät der Person auf die erste Vorrichtung oder zweite Vorrichtung kann beispielsweise beruhend auf der bereits beschriebenen Nahbereichs-Funkkommunikation, auf optischer Übertragung (beispielsweise durch Erfassen einer auf einer Anzeigeeinheit des Geräts der Person angezeigten optischen Information, z.B. eines Codes, durch die erste Vorrichtung), oder auf einer drahtgebundenen Verbindung (beispielsweise auf einer Universal Serial Bus (USB) Verbindung) erfolgen.

In beispielhaften Ausführungsformen aller Aspekte der Erfindung wird die erste Information von einem Server erzeugt, an ein Gerät einer Person, für die die Sendung bestimmt ist, übertragen und von dem Gerät an die erste Vorrichtung oder an eine zweite Vorrichtung, die mit der ersten Vorrichtung operativ verbunden ist, übertragen. Die für die vorherige Ausführungsform geschilderten beispielhaften Eigenschaften der Erzeugung der ersten Information am Server und der Übertragung der ersten Information vom Gerät der Person an die erste oder zweite Vorrichtung können hier entsprechend vorliegen. Beispielsweise kommuniziert die Person über eine Webseite, die mit dem Gerät der Person aufgerufen wurde, oder einer auf dem Gerät der Person installierten Anwendung mit dem Server. Im Rahmen dieser Kommunikation kann die Erzeugung der ersten Information vom Gerät der Person (z.B. auf Wunsch der Person, z.B. unter Angabe einer Kennung der Sendung oder durch Auswahl der Sendung aus einer Liste von ein oder mehreren an die Person zuzustellenden Sendungen, die auf der Webseite oder in der Anwendung angezeigt wird) angefordert werden. Je nach Art der angeforderten ersten Information kann die Anforderung auch (weitere) Informationen enthalten, die zur Erzeugung der ersten Information erforderlich sind, beispielsweise Zahlungsinformationen. Der Server kann die erste Information (beispielsweise die Zustellungszustimmungsinformation oder die Zahlungsinformation, insbesondere wenn die Person Details der Zahlungsinformation auf dem Server hinterlegt hat) dem Gerät der Person auch ohne vorherige Anforderung durch das Gerät zur Verfügung stellen (beispielsweise zum Herunterladen durch das Gerät, oder durch Übertragen an die Anwendung auf dem Gerät). Dieser Vorgang kann beispielsweise durch ein Ereignis in der Zustellungskette, die die Sendung im Zuge der Zustellung durchläuft, ausgelöst werden, beispielsweise durch das erfasste Passieren der Sendung von Zustellungsstationen wie beispielsweise Sortierzentren oder Verladestationen, oder zu einem vordefinierten Zeitpunkt vor der (prognostizierten) Zustellung. Dies stellt für die Person eine besonders nutzerfreundliche Variante dar, da die erste Information dann, wenn die Übertragung an die erste oder zweite Vorrichtung gewünscht wird, nicht vom Server angefordert werden muss und mithin unabhängig von einer gegenwärtig zum Server bestehenden Verbindung die erste Information an die erste oder zweite Vorrichtung übertragen werden kann. Die erste Information (insbesondere die Bezahlt-Information) kann vom Server auch nach Abschluss eines Bezahlprozesses der in der Sendung enthaltenen Ware erzeugt werden, der beispielsweise ebenfalls auf Kommunikation zwischen dem Gerät der Person und dem Server beruht. Die Anwendung auf dem Gerät kann beispielsweise eingerichtet sein, die Übertragung der erhaltenen ersten Information an die erste oder zweite Vorrichtung auszulösen und/oder zu steuern, beispielsweise auf Veranlassung der Person, aber alternativ auch automatisch in Reaktion auf das Erhalten der ersten Information.

In beispielhaften Ausführungsformen aller Aspekte der Erfindung wird die erste Information von einer Person in ein Gerät des Zustellers eingegeben oder dem Zusteller mitgeteilt oder gezeigt. Die zuvor beschrieben Erzeugung der ersten Information am Server oder auf dem Gerät der Person kann in dieser Ausführungsform analog stattfinden. Die erste Information wird dann aber nicht mittels der ersten Vorrichtung dem Zusteller bzw. dem Gerät des Zustellers bereitgestellt oder kommuniziert, sondern von der Person zur Kenntnis genommen und dann dem Zusteller mitgeteilt (beispielsweise mündlich oder durch Vorzeigen) oder gezeigt (beispielsweise durch Vorlegen oder Übergeben einer optischen Wiedergabe der ersten Information auf einem Informationsträger, beispielsweise auf einem Papier oder Etikett). Die Person kann die erste Information beispielsweise mit ihrem Gerät (insbesondere von dem Server) empfangen haben, und dann von einer Anzeigeeinheit des Geräts ablesen oder unter Verwendung des Geräts ausdrucken. Die erste Information kann beispielsweise in einer Form repräsentiert sein (z.B. als Code), die sich zum benutzerfreundlichen Mitteilen/Vorzeigen eignet, beispielsweise als numerischer oder alphanumerischer Code mit vordefinierter maximaler Länge, beispielsweise weniger als N Zeichen, wobei N eine natürliche Zahl aus dem Intervall von 1-20 ist.

In beispielhaften Ausführungsformen aller Aspekte der Erfindung wird die erste Information dem Zusteller von einer Person im Rahmen einer Kommunikation, die auf Telefonie, Videotelefonie oder elektronische Nachrichten mit Text und/oder Bildern beruht, mitgeteilt. Beispielsweise führt der Zusteller die Kommunikation mit seinem Gerät aus, bei dem es sich beispielsweise um ein portables elektronisches Gerät, insbesondere ein Mobiltelefon (z.B. ein Smartphone) oder um einen Handscanner handeln kann. Die Kommunikation findet beispielweise zumindest teilweise im Zeitpunkt der Zustellung der Sendung statt. Beispielsweise wird dem Zusteller auf diesem Weg die erste Information kommuniziert, deren Erhalten notwendige Bedingung für die Zustellung der Sendung ist. Bei den elektronischen Nachrichten kann es sich beispielsweise um E-Mails, SMS-, MMS- oder Fax- Nachrichten handeln, um nur ein paar Beispiele zu nennen. Durch diese Art der Übermittlung der ersten Information an den Zusteller ist es möglich, dass die Zustellung einer Sendung auch bei Abwesenheit der Person erfolgen kann. Die Kommunikation kann beispielsweise von dem Zusteller ausgelöst werden, beispielsweise wenn er den Ort der Zustellung erreicht hat, aber die Person, für die die Sendung bestimmt ist, nicht antrifft.

In beispielhaften Ausführungsformen aller Aspekte der Erfindung wird die Kommunikation von der Person mit einem mobilen Kommunikationsgerät, insbesondere einem Mobiltelefon, geführt. Dadurch wird es dem Zusteller oder dessen Gerät ermöglicht, die Person auch bei Abwesenheit vom Zustellungsort zum Zustellungszeitpunkt zu erreichen, um die erste Information zu erhalten, unabhängig davon, wo sich die Person gerade aufhält.

Eine Kommunikationsadresse (z.B. eine Telefonnummer oder E-Mail-Adresse) für den Aufbau der Kommunikation mit der Person wird für den Zusteller oder dessen Gerät beispielsweise am Ort der Zustellung bereitgestellt (z.B. drahtlos oder drahtgebunden auslesbar elektronisch gespeichert) oder an diesen/dieses kommuniziert. Die Bereitstellung oder Kommunizierung kann allerdings an eine vorherige erfolgreiche Authentisierung des Zustellers geknüpft sein, insbesondere gegenüber einer Vorrichtung, die die Kommunikationsadresse bereitstellt oder kommuniziert. Die Kommunikationsadresse kann beispielsweise in codierter Form bereitgestellt werden, beispielsweise in Form eines eindimensionalen oder zweidimensionalen Barcodes. Beispielsweise kann der Zusteller durch Erfassen des Barcodes mit seinem Gerät die Kommunikationsadresse erhalten und die Kommunikation mit der Person initiieren.

Die Kommunikationsadresse für den Aufbau der Kommunikation mit der Person kann beispielsweise in einer Vorrichtung gespeichert sein, die sich am Ort der Zustellung der Sendung befindet und die Kommunikation zwischen dem Zusteller und der Person aufbaut, insbesondere ohne dass die Kommunikationsadresse dem Zusteller oder dessen Gerät bekannt wird. Bei der Vorrichtung kann es sich beispielsweise um die oben bereits beschriebene erste Vorrichtung handeln. Die Vertraulichkeit der Kommunikationsadresse der Person kann auf diese Weise gewahrt bleiben. Beispielsweise verfügt die erste Vorrichtung dann über Mittel zur Einrichtung der Kommunikation, beispielsweise um als Endgerät in der Kommunikation zu fungieren.

In beispielhaften Ausführungsformen aller Aspekte der Erfindung wird die erste Information unter Verwendung einer Kennung der Sendung, insbesondere einer Sendungsverfolgungsnummer für die Sendung, erzeugt. Die Sendungsverfolgungsnummer wird der Person beispielsweise von dem Zustellungsunternehmen mitgeteilt, um der Person zu ermöglichen, sich anhand der Sendungsverfolgungsnummer über den gegenwärtigen Status der Zustellung der Sendung zu informieren. Die Kennung der Sendung ermöglicht beispielsweise eine Identifizierung der Sendung und/oder die Unterscheidung von anderen Sendungen. Die Verwendung der Kennung bei der Erzeugung der ersten Information erlaubt es, die erste Information an eine bestimmte Kennung und damit eine bestimmte Sendung zu binden. Die erste Information bezieht sich mithin nur auf genau die Sendung, deren Kennung bei der Erzeugung der ersten Information verwendet wurde. Wenn die erste Information Zustellungszustimmungsinformation oder Bezahlt-Information umfasst, spiegelt die erste Information also wider, für welche Sendung die Zustimmung zur Zustellung erklärt werden soll bzw. aus welcher Sendung eine Ware bezahlt wurde.

In beispielhaften Ausführungsformen aller Aspekte der Erfindung umfasst die erste Information Prüfinformation, die es ermöglicht, die Authentizität und/oder Integrität zumindest eines Teils der ersten Information zu prüfen. Die Prüfinformation kann beispielsweise eine Signatur (beispielsweise in Form eines verschlüsselten Hashwerts) oder ein Nachrichtenauthentifizierungscode (Message Authentication Code (MAC), z.B. ein Keyed-Hash Message Authentication Code (HMAC)) sein. Beispielsweise wird dazu über einen Teil der ersten Information (z.B. deren Nutzinformation) ein Hashwert gebildet und dieser mit einem privaten Schlüssel eines asymmetrischen Schlüsselpaars verschlüsselt, um die Prüfinformation zu erhalten. Wenn die erste Information dann an einer Vorrichtung (z.B. dem Gerät des Zustellers) erhalten wird, kann zur Prüfung der Integrität (Unversehrtheit) des erhaltenen Teils der ersten Information und der Prüfinformation (also des verschlüsselten Hashwerts) über einen entsprechenden Teil der erhaltenen ersten Information (z.B. deren Nutzinformation) ein Hashwert gebildet werden und dieser Hashwert mit einer entschlüsselten Version des erhaltenen Hashwerts verglichen werden. Die Entschlüsselung beruht beispielsweise auf einem öffentlichen Schlüssel des asymmetrischen Schlüsselpaars. Bei Übereinstimmung der Hashwerte kann von der Integrität des Teils der ersten Information (z.B. deren Nutzinformation) und der Prüfinformation ausgegangen werden, und, falls der private Schlüssel nur einer vertrauenswürdigen Entität zugänglich ist, auch von der Authentizität des Teils der ersten Information (z.B. deren Nutzinformation) und der Prüfinformation (also dass der Teil der ersten Information und die Prüfinformation von der vertrauenswürdigen Entität stammen).

Die Einbeziehung von Prüfinformation zur Ermöglichung der Prüfung der Authentizität und/oder Integrität zumindest eines Teils der ersten Information ist insoweit vorteilhaft, als es sich bei der Zustellungszustimmungsinformation, der Bezahlt-Information und der Zahlungsinformation, die insbesondere in diesem Teil der ersten Information enthalten sein können, um sicherheitsrelevante Informationen handelt, deren Manipulation zu finanziellen Nachteilen für die Person oder das Zustellungsunternehmen, das für die Zustellung der Sendung verantwortlich ist, führen kann. Der Zusteller kann bei positiv verlaufender Prüfung davon ausgehen, dass die erste Information von einer vertrauenswürdigen Entität (insbesondere dem Server) erzeugt wurde und seit ihrer Erzeugung nicht verändert wurde.

Das Verfahren gemäß dem ersten Aspekt der Erfindung kann beispielsweise ferner das Prüfen der Authentizität und/oder Integrität zumindest eines Teils der ersten Information zumindest basierend auf der Prüfinformation umfassen, wobei ein positives Ergebnis des Prüfens eine weitere notwendige Bedingung dafür ist, dass das Zustellen der Sendung oder das Anzeigen oder Ausgeben der zweiten Information durchgeführt wird.

Beim Verfahren gemäß dem zweiten Aspekt der Erfindung kann beispielsweise ein Prüfen der Authentizität und/oder Integrität zumindest eines Teils der ersten Information basierend auf der Prüfinformation mit positivem Ergebnis eine weitere notwendige Bedingung dafür sein, dass die Sendung durch den Zusteller zugestellt wird.

In beispielhaften Ausführungsformen aller Aspekte der Erfindung umfasst die erste Information zumindest die Zustellungszustimmungsinformation oder die Bezahlt-Information in Form eines ersten Codes, und wobei ein zweiter Code mit der Sendung assoziiert oder für die Sendung bestimmbar oder abrufbar ist. Die Codes können beispielsweise alphabetische, numerische oder alphanumerische Codes sein, oder Barcodes, um nur ein paar Beispiele zu nennen. Das Format der Codes kann beispielsweise so gewählt sein, dass eine leichte Vergleichbarkeit der Codes auch durch einen Menschen gewährleistet ist. Dies kann beispielsweise bei numerischen, alphabetischen oder alphanumerischen Codes gegeben sein, insbesondere wenn deren Länge nicht mehr als zehn, acht, sechs oder vier Zeichen beträgt, um nur ein paar Beispiele zu nennen.

Die erste Information kann dann beispielsweise zumindest die Zustellungszustimmungsinformation in Form des ersten Codes umfassen, und es folgt aus dem ersten Code oder ist daraus ableitbar, dass eine Person der Zustellung der Sendung trotz Abwesenheit der Person zustimmt, wenn der erste Code gemäß einer vordefinierten Vorschrift zu dem zweiten Code korrespondiert, insbesondere damit übereinstimmt. Beispielsweise folgt hier aus der Korrespondenz (z.B. Übereinstimmung) der beiden Codes bereits, dass der erste Code authentisch und integer ist, weil er sonst nicht zu dem zweiten Code korrespondieren würde, insbesondere, wenn die beiden korrespondierenden (beispielsweise übereinstimmenden) Codes für jede Sendung aus einer Vielzahl von Sendungen unterschiedlich gewählt sind. Beispielsweise wird der erste Code für jede Sendung unter Verwendung einer Zufallszahl oder unter Verwendung einer Kennung der Sendung (die beispielsweise für jede Sendung unterschiedlich ist) erzeugt. Der zweite Code wird dann jeweils korrespondierend zum ersten Code, beispielsweise als Kopie des ersten Codes, erzeugt. Eine Korrespondenz der beiden Codes kann beispielsweise durch eine vorbestimmte Vorschrift definiert sein, beispielsweise als Identität.

Die erste Information kann alternativ zumindest die Bezahlt-Information in Form des ersten Codes umfassen, und es folgt aus dem ersten Code oder ist daraus ableitbar, dass eine Bezahlung der Ware, die in der Sendung enthalten ist, erfolgt ist, wenn der erste Code gemäß einer vordefinierten Vorschrift zu dem zweiten Code korrespondiert, insbesondere damit übereinstimmt. Beispielsweise folgt hier aus der Korrespondenz (z.B. Übereinstimmung) der beiden Codes bereits, dass der erste Code authentisch und integer ist, weil er sonst nicht zu dem zweiten Code korrespondieren würde, insbesondere, wenn die beiden korrespondierenden (beispielsweise übereinstimmenden) Codes für jede Sendung aus einer Vielzahl von Sendungen unterschiedlich gewählt sind. Beispielsweise wird der erste Code für jede Sendung unter Verwendung einer Zufallszahl oder unter Verwendung einer Kennung der Sendung (die beispielsweise für jede Sendung unterschiedlich ist) erzeugt. Der zweite Code wird dann jeweils korrespondierend zum ersten Code, beispielsweise als Kopie des ersten Codes, erzeugt. Eine Korrespondenz der beiden Codes kann beispielsweise durch eine vorbestimmte Vorschrift definiert sein, beispielsweise als Identität.

Der zweite Code kann beispielsweise auf die Sendung oder ein Etikett auf der Sendung gedruckt, in einem mit der Sendung verbundenen oder darin enthaltenen Speicherelement auslesbar gespeichert, in einem Gerät des Zustellers gespeichert und dort anhand von Informationen der Sendung, insbesondere einer Kennung der Sendung, identifizierbar oder in einem Server gespeichert oder von diesem erzeugbar und mittels eines Geräts des Zustellers von dem Server anhand von Informationen der Sendung, insbesondere einer Kennung der Sendung, abrufbar sein. Auf diese Art kann der zweite Code insbesondere im Zeitpunkt der Zustellung dem Zusteller oder dessen Gerät zugänglich sein oder zugänglich gemacht werden, so dass ein Vergleich mit dem durch den Zusteller oder dessen Gerät erhaltenen oder erfassten ersten Code durchgeführt werden.

In beispielhaften Ausführungsformen des ersten Aspekts der Erfindung umfasst das Verfahren gemäß dem ersten Aspekt ferner: Erhalten oder Erfassen dritter Information durch einen Zusteller oder ein Gerät des Zustellers, wobei aus der dritten Information folgt oder ableitbar ist, in welcher Form die Zustellung der Sendung bei Abwesenheit der Person erfolgen darf. Entsprechend umfasst das Verfahren gemäß dem zweiten Aspekt der Erfindung in beispielhaften Ausführungsformen des zweiten Aspekts der Erfindung: Erhalten oder Erzeugen dritter Information, wobei aus der dritten Information folgt oder ableitbar ist, in welcher Form die Zustellung der Sendung bei Abwesenheit der Person erfolgen darf, und Bereitstellen oder Kommunizieren der dritten Information. Die dritte Information kann beispielsweise spezifizieren, in/an welche Orte/Räume und/oder an welche Personen die Zustellung der Sendung bei Abwesenheit der Person (im Zeitpunkt der Zustellung vom Ort der Zustellung) erfolgen darf. Dadurch kann die zustimmende/bezahlende Person ihr Risiko reduzieren, dass die Sendung bei Abwesenheit der Person an nicht vertrauenswürdige Personen oder an unsichere Orte/Räume zugestellt wird.

In beispielhaften Ausführungsformen aller Aspekte der Erfindung ist notwendige Bedingung dafür, dass die Person in die Lage versetzt wird, die erste Information mit der Zustellungszustimmungsinformation zu verwenden um ihre Zustimmung zur Zustellung der Sendung trotz Abwesenheit der Person zu signalisieren, dass die Person insbesondere basierend auf einem für die Person angelegten Profil als Person eingestuft wird, die die in der Sendung enthaltene Ware nach der erfolgten Zustellung auch bezahlen wird. Beispielsweise wird der Person, insbesondere in einer Anwendung (die beispielsweise auf einer Webseite integriert oder auf einem Gerät der Person installiert ist), die erste Information nur dann zur Verfügung gestellt, wenn die Person als Person eingestuft wird, die die in der Sendung enthaltene Ware nach der erfolgten Zustellung auch bezahlen wird. Wenn die Person nicht als Person eingestuft wird, die die in der Sendung enthaltene Ware nach der erfolgten Zustellung auch bezahlen wird, kann der Person, insbesondere in der Anwendung, beispielsweise die Möglichkeit gegeben werden, die Ware zu bezahlen, was beispielsweise zur Ausgabe von erster Information, die Bezahlt-Information umfasst, an die Person oder deren Gerät führen kann, und/oder der Person, insbesondere in der Anwendung, die Möglichkeit gegeben wird, erste Information, die Zahlungsinformation umfasst, zu erhalten oder an das Gerät der Person übertragen zu lassen. In beispielhaften Ausführungsformen aller Aspekte der Erfindung umfasst die Zahlungsinformation Information zur Vornahme einer Kreditkartenzahlung, Information zur Vornahme einer Zahlung per Lastschrift oder Information zur Vornahme einer Belastung eines bei einem Zustellungsunternehmen, das für die Zustellung der Sendung verantwortlich ist, geführten Kontos.

In beispielhaften Ausführungsformen aller Aspekte der Erfindung erfolgt die Bezahlung der Ware an eine zweite Entität (z.B. ein Unternehmen oder eine Person), die gegenüber einer ersten Entität (z.B. einem Unternehmen oder einer Person), die der Verkäufer der Ware und/oder der Versender der Sendung ist, verschieden und insbesondere als Inkasso-Dienstleister für die erste Entität tätig ist. Alternativ erfolgt die Bezahlung der Ware an die erste Entität.

Die zweite Entität ist beispielsweise Teil eines Unternehmens, das zumindest einen Teil des Zustellungsprozesses der Sendung ausführt oder mit einem derartigen Unternehmen wirtschaftlich assoziiert ist.

Die oben beschriebenen, zunächst grundsätzlich für sich alleine stehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

Es zeigen:
- Fig. 1:: eine schematische Darstellung einer beispielhaften Ausführungsform eines Systems gemäß der vorliegenden Erfindung;
- Fig. 2:: ein Flussdiagramm einer beispielhaften Ausführungsform eines Verfahrens gemäß dem ersten Aspekt der vorliegenden Erfindung;
- Fig. 3:: ein Flussdiagramm einer beispielhaften Ausführungsform eines Verfahrens gemäß dem zweiten Aspekt der vorliegenden Erfindung;
- Fig. 4:: eine schematische Darstellung einer beispielhaften Ausführungsform einer Vorrichtung gemäß dem ersten Aspekt der Erfindung; und
- Fig. 5:: eine schematische Darstellung einer beispielhaften Ausführungsform einer Vorrichtung gemäß dem zweiten Aspekt der Erfindung; und

### Detaillierte Beschreibung einiger beispielhafter Ausführungsformen der Erfindung

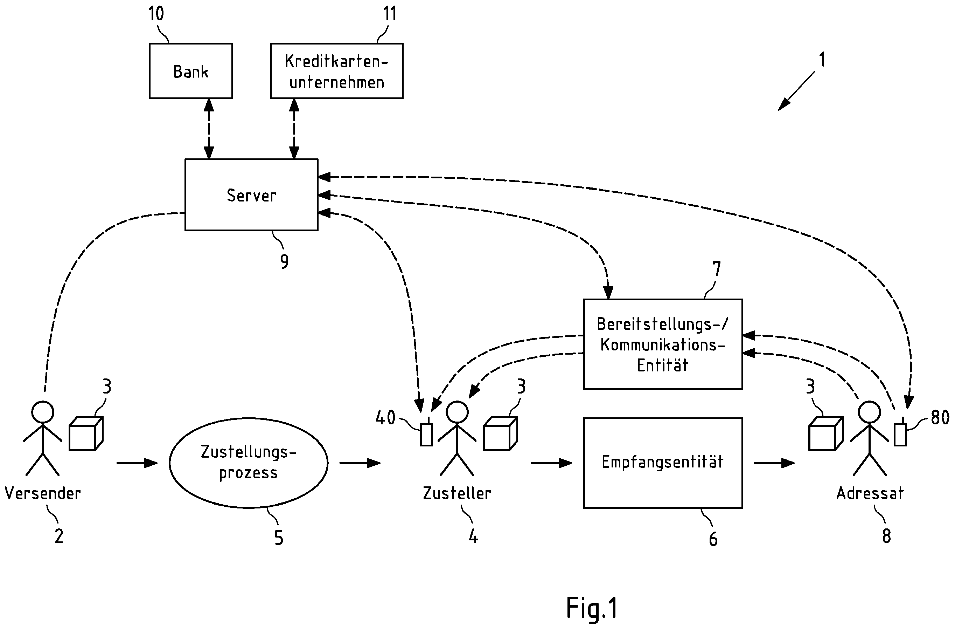

Fig. 1 ist eine schematische Darstellung einer beispielhaften Ausführungsform eines Systems 1 gemäß der vorliegenden Erfindung.

Das System 1 zeigt mit durchgezogenen Pfeilen den Weg einer Sendung 3 entlang verschiedener Stationen einer Zustellungskette von einem Versender 2 zu einem Adressaten 8 der Sendung 3, und zeigt mit gestrichelten Pfeilen den Informationsfluss zwischen den Komponenten des Systems 1. Der Informationsfluss ist dabei insbesondere logisch zu verstehen, kann also über physikalische Zwischenelemente wie beispielsweise Relais oder Router erfolgen, insbesondere bei zumindest abschnittsweise drahtlosen Verbindungen.

Eine Sendung 3, bei der es sich beispielsweise um einen Brief (insbesondere einen Brief mit darin enthaltener Ware, z.B. einem Buch), ein Päckchen oder ein Paket handeln kann, wird von einem Versender 2, der beispielsweise auch der Verkäufer einer in der Sendung 3 enthaltenen Ware ist, aber nicht zwingend sein muss, zum Versand durch ein Zustellungsunternehmen übergeben. Wie die Sendung 3 vom Versender 2 konkret aufgegeben wird, ist in Fig. 1 nicht detailliert dargestellt. Beispielsweise gibt der Versender 2 die Sendung 3 bei einer Filiale des Zustellungsunternehmens auf. Allerdings kann der Versender 2 die Sendung 3, beispielsweise bei großen Anzahlen von täglich anfallenden Sendungen 3, wie es bei Online-Händlern der Fall ist, auch direkt an ein Sortierzentrum des Zustellungsunternehmens liefern. Der sich an die Aufgabe der Sendung 3 durch den Versender 2 anschließende Zustellungsprozess 5 ist in Fig. 1 nur schematisch dargestellt. Er führt letztendlich zur Zustellung der Sendung 3 durch einen Zusteller 4 in/an eine Empfangsentität 6.

Die Empfangsentität 6 befindet sich am Zustellungszeitpunkt am Zustellungsort und empfängt die Sendung 3 vom Zusteller 3. Bei der Empfangsentität 6 kann es sich um eine Person oder eine Vorrichtung handeln, an/in die die Sendung 3 zugestellt wird. Wie in Fig. 1 beispielhaft dargestellt, kann es sich bei der Empfangsentität 6 um eine Entität handeln, die von dem Adressaten 8 der Sendung 3 verschieden ist, so dass nach erfolgter Zustellung der Sendung 3 durch den Zusteller 4 die Sendung 3 noch ein Transfer der Sendung 3 von der Empfangsentität 6 zu dem Adressaten 8 erfolgt. In diesem Fall ermöglicht die Empfangsentität 6 also die Zustellung der Sendung 3 auch in Abwesenheit des Adressaten 8. Allerdings kann die Empfangsentität auch den Adressaten 8 verkörpern, so dass in Abweichung der Darstellung in Fig. 1 dann kein Transfer der Sendung 3 von der Empfangsentität 6 zum Adressaten 8 mehr erforderlich ist.

Der Adressat 8 der Sendung 3 ist die Person, für die die Sendung 3 bestimmt ist. Es handelt sich beispielsweise, aber nicht zwingend, um die Person, die eine in der Sendung 3 befindliche Ware bestellt und/oder bezahlt hat. Der Adressat 8 der Sendung 3 ist beispielsweise in einer Lieferadresse der Sendung 3 bezeichnet und/oder anderweitig als Person, für die die Sendung bestimmt ist, identifizierbar, beispielsweise in einer Datenbank anhand einer Kennung der Sendung.

Die Empfangsentität 6 kann beispielsweise folgendes umfassen:
- den Adressaten 8;
- eine Person, die anstelle des Adressaten 8 die Sendung 3 entgegennimmt, z.B. ein Familienmitglied der Familie des Adressaten 8, ein Mitbewohner oder ein Nachbar des Adressaten 8;
- ein insbesondere verschließbarer Aufbewahrungsraum, insbesondere in einem Bauwerk (z.B. in einem Gebäude, einer Garage oder einem Gartenhaus) oder in einer Vorrichtung, beispielsweise in einer Schließfachanlage (z.B. einer Packstation), in einem Brief- und/oder Paketkasten (der beispielsweise am Wohnsitz oder Geschäftssitz des Adressaten 8 aufgestellt ist), in einem Fahrzeug (z.B. ein Kofferraum), wobei sich zumindest der Adressat Zugang zu dem Aufbewahrungsraum verschaffen kann, um die Sendung 3 zu entnehmen,
- ein dem Adressaten 8 zugänglicher Aufbewahrungsort, insbesondere ein Teil eines Grundstücks des Adressaten 8 wie beispielsweise eine Terrasse,
- ein Lager, in das der Adressat 8 eine oder mehrere Sendungen 3 zustellen und sich dann von einem Lieferdienst (der beispielsweise von dem Zustellungsunternehmen, dem der Zusteller zugeordnet ist, verschieden ist) liefern lassen kann, insbesondere gemäß einem vom Adressaten 8 angegebenen Lieferzeitpunkt oder -zeitfenster, oder
- eine Aufbewahrungsstelle, in der Dienstleistungen angeboten und/oder Waren und/oder Speisen und/oder Kraftstoffe verkauft werden (z.B. ein Paketshop, eine Einzelhandelsfiliale, eine Dienstleistungsfiliale, eine Tankstelle, ein Restaurant, etc.), von der der Adressat 8 die Sendung 3 insbesondere während der Öffnungszeiten der Aufbewahrungsstelle die Sendung 3 abholen kann.

Gemäß beispielhaften Ausführungsformen der vorliegenden Erfindung wird die Sendung 3 vom Versender 2 als sog. Nachnahme-Sendung aufgegeben. Eine in der Sendung 3 enthaltene Ware, beispielsweise eine bei einem Online-Händler 2 durch eine Person, beispielsweise den Adressaten 8, bestellte Ware, ist also im Zeitpunkt der Aufgabe der Sendung 3 zum Versand noch nicht bezahlt worden. Diese Bezahlung der Ware erfolgt in beispielhaften Ausführungsformen der Erfindung durch eine Person, die beispielsweise der Käufer der Ware und/oder der Adressat 8 der Sendung 3 ist, vor dem Zeitpunkt der Zustellung der Sendung 3 in/an die Empfangsentität 6, in diesem Zeitpunkt oder danach, allerdings bevorzugt nicht durch Barzahlung an den Zusteller 4. In beispielhaften Ausführungsformen der Erfindung ist es insbesondere möglich, dass eine Nachnahme-Sendung zugestellt werden kann, ohne dass sich der Adressat 8 der Sendung 3 im Zeitpunkt der Zustellung am Ort der Zustellung befindet.

Der Versender 2 informiert den Server 9, bei dem es sich insbesondere um einen Server des Zustellungsunternehmens handelt, das für die Zustellung der Sendung 3 verantwortlich ist, bei Aufgabe der Sendung 3 darüber, dass die Sendung 3 eine Nachnahme-Sendung ist, beispielsweise über eine dazu vom Server 9 bereitgestellte Webseite oder eine anderweitige Kommunikationsschnittstelle (beispielsweise über eine Anwendungsprogrammierungsschnittstelle (Application Programming Interface, API)). Bereits ab diesem Zeitpunkt kann der Sendung 3 eine Kennung zugeordnet sein, mittels der die Sendung 3 (insbesondere eindeutig) identifizierbar ist. Im Server 9 kann zu der Kennung dann beispielsweise in einer Datenbank abgespeichert werden, dass es sich bei der zugehörigen Sendung 3 um eine Nachnahme-Sendung handelt.

Im Gegensatz zum aus dem Stand der Technik bekannten Nachnahme-Verfahren, bei dem die Bezahlung der in der Sendung 3 enthaltenen Ware im Zeitpunkt der Zustellung der Sendung 3 gegenüber dem Zusteller 4 in bar erfolgt, muss der Zusteller 4 in beispielhaften Ausführungsformen der vorliegenden Erfindungen anderweitig in die Lage versetzt werden zu entscheiden, ob er die Sendung 3 zustellen darf. Diese Entscheidung kann beispielsweise an das Erhalten oder Erfassen von erster Information durch den Zusteller 4 oder ein Gerät 40 des Zustellers 4 (z.B. ein Handscanner oder ein Mobiltelefon, insbesondere ein Smartphone) geknüpft sein. Diese erste Information wird in beispielhaften Ausführungsformen der Erfindung durch die Bereitstellungs- oder Kommunikationsentität 7 zur Erfassung bereitgestellt oder an den Zusteller 4 oder sein Gerät 40 kommuniziert (z.B. übertragen).

Die Bereitstellungs- oder Kommunikationsentität 7 kann beispielsweise eine Person, z.B. eine mit dem Adressaten 8 an der gleichen Adresse wohnende Person (z.B. ein Familienmitglied oder ein Mitbewohner) oder ein Nachbar, oder eine Vorrichtung sein. Die Bereitstellungs- oder Kommunikationsentität 7 kann beispielsweise zumindest im Zeitpunkt der Zustellung am Ort der Zustellung befindlich sein. Wenn es sich bei der Entität 7 um eine Vorrichtung handelt, kann diese beispielsweise fest (insbesondere langfristig) am Ort der Zustellung installiert sein oder zumindest für den Zeitpunkt der Zustellung dort platziert worden sein. Wenn es sich bei der Entität 7 um eine Vorrichtung handelt, kann die Entität 7, soweit die Empfangsentität 6 als Vorrichtung ausgebildet ist, beispielsweise Teil der Empfangsentität 6 oder operativ mit dieser verbunden sein.

Wenn es sich bei der Entität 7 um eine Person handelt, kann dies, falls auch die Empfangsentität 8 eine Person ist, beispielsweise dieselbe Person sein.

Die Bereitstellungs- oder Kommunikationsentität 7 ist in Fig. 1 beispielhaft als Entität 7 dargestellt, die von dem Adressaten 8 und dessen Gerät 80 (z.B. einem Mobiltelefon oder Computer) verschieden ist, was allerdings nicht zwingend ist. Beispielsweise kann die Bereitstellungs- oder Kommunikationsentität 7 auch der Adressat 8 oder dessen Gerät 80 sein.

Die Bereitstellungs- oder Kommunikationsentität 7 kann beispielsweise folgendes umfassen:
- den Adressaten 8;
- das Gerät 80 des Adressaten 8; oder
- eine Person, die anstelle des Adressaten 8 die Sendung 3 entgegennimmt, z.B. eine mit dem Adressaten 8 an der gleichen Adresse wohnende Person (z.B. ein Familienmitglied oder ein Mitbewohner) oder ein Nachbar des Adressaten 8;
oder wie folgt ausgebildet sein:
- falls die Empfangsentität 6 ein insbesondere verschließbarer Aufbewahrungsraum in einem Bauwerk (z.B. in einem Gebäude, einer Garage oder einem Gartenhaus) ist, kann die Entität Teil eines Zugangskontrollsystems für zumindest einen Teil des Bauwerks sein;
- falls die Empfangsentität 6 ein insbesondere verschließbarer Aufbewahrungsraum in einer Vorrichtung, beispielsweise in einer Schließfachanlage (z.B. einer Packstation), in einem Brief- und/oder Paketkasten (der beispielsweise am Wohnsitz oder Geschäftssitz des Adressaten 8 aufgestellt ist) oder in einem Fahrzeug (z.B. ein Kofferraum), kann die Entität 7 beispielsweise Teil der Vorrichtung, insbesondere einer Steuereinheit der Vorrichtung, sein oder operativ mit der Vorrichtung, insbesondere mit deren Steuereinheit, verbunden sein;
- falls die Empfangsentität 6 ein Lager, in das der Adressat 8 eine oder mehrere Sendungen 3 zustellen und sich dann von einem Lieferdienst (der beispielsweise von dem Zustellungsunternehmen, dem der Zusteller zugeordnet ist, verschieden ist) liefern lassen kann, ist, kann die Entität 7 beispielsweise eine Vorrichtung oder Person sein, die mit dem Lager assoziiert ist (beispielsweise dort befindlich ist), oder
- falls die Empfangsentität 6 eine Aufbewahrungsstelle ist, in der Dienstleistungen angeboten und/oder Waren und/oder Speisen und/oder Kraftstoffe verkauft werden (z.B. ein Paketshop, eine Einzelhandelsfiliale, eine Dienstleistungsfiliale, eine Tankstelle, ein Restaurant, etc.), von der der Adressat 8 die Sendung 3 insbesondere während der Öffnungszeiten der Aufbewahrungsstelle die Sendung 3 abholen kann, kann die Entität 7 beispielsweise eine Vorrichtung oder Person sein, die mit der Aufbewahrungsstelle assoziiert ist (beispielsweise dort befindlich und/oder angestellt ist).

Bei der ersten Information kann es sich um folgendes handeln:
- Zustellungszustimmungsinformation, aus der folgt oder ableitbar ist, dass eine Person (insbesondere der Adressat 8) der Zustellung einer zumindest unter Verwendung der Zustellungszustimmungsinformation identifizierbaren Sendung 3 trotz Abwesenheit der Person zustimmt, wobei die Sendung 3 eine Ware enthält, die im Falle der Zustellung bezahlt werden muss;
- Bezahlt-Information, aus der folgt oder ableitbar ist, dass eine Bezahlung einer Ware, die in einer zumindest unter Verwendung der Bezahlt-Information identifizierbaren Sendung 3 enthalten ist, erfolgt ist; oder
- Zahlungsinformation, mit der eine Bezahlung einer in einer Sendung 3 enthaltenen Ware zu Lasten einer Person (insbesondere des Adressaten 8), insbesondere ohne weitere Beteiligung der Person, vorgenommen werden kann und darf.

Die erste Information kann beispielsweise vom Server 9, vom Gerät 8 des Adressaten 8 oder von der Bereitstellungs- oder Kommunikationsentität 7 erzeugt werden, beispielsweise veranlasst durch den Adressaten 8, aber alternativ auch ohne Veranlassung durch den Adressaten 8. Sie kann dann mittelbar oder unmittelbar an die Bereitstellungs- oder Kommunikationsentität 7 übermittelt werden, um dann beispielsweise von dem Zusteller 4 oder dessen Gerät 40 erhalten oder erfasst werden zu können.

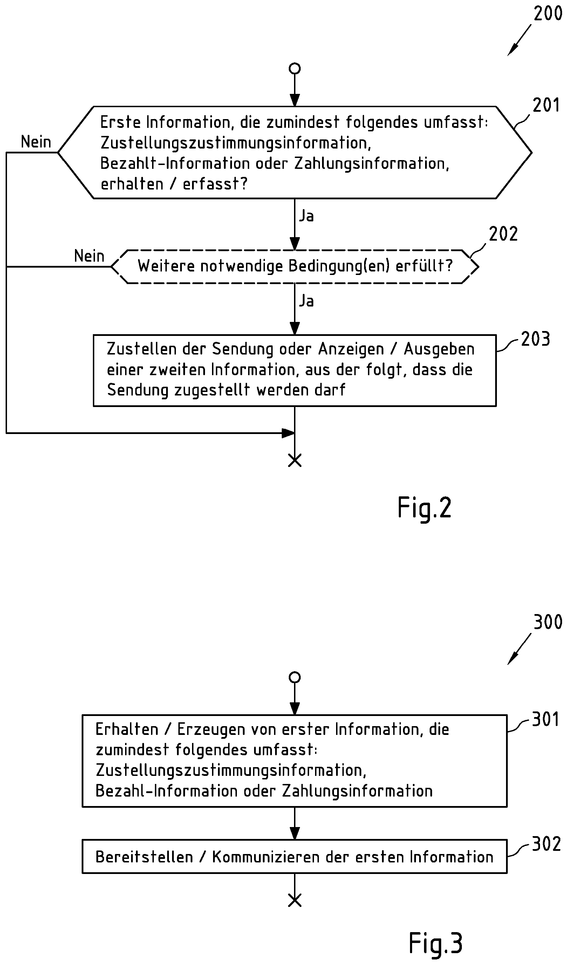

Fig. 2 ist ein Flussdiagramm einer beispielhaften Ausführungsform 200 eines Verfahrens gemäß dem ersten Aspekt der vorliegenden Erfindung. Dieses Verfahren 200 wird beispielsweise vom Zusteller 4 oder dessen Gerät 40 ausgeführt. Wenn das Verfahren vom Zusteller 4 ausgeführt wird, umfasst der Schritt 203 nur das Zustellen der Sendung. Wenn das Verfahren vom Gerät 40 des Zustellers 4 ausgeführt wird, umfasst der Schritt 203 nur den Schritt des Anzeigens/Ausgebens einer zweiten Information, aus der folgt, dass die Sendung zugestellt werden darf.

Im Schritt 201 wird geprüft, ob erste Information, die zumindest Zustellungszustimmungsinformation, Bezahlt-Information oder Zahlungsinformation umfasst, erhalten oder erfasst wurde, insbesondere von der Bereitstellungs- oder Kommunikationseinheit 7.

Das Erhalten oder Erfassen kann ebenfalls Bestandteil des Verfahrens 200 sein. Das Erhalten oder Erfassen kann beispielsweise nur dann erfolgen, wenn sich der Zusteller 4 oder das Gerät 40 des Zustellers erfolgreich authentisiert haben, insbesondere gegenüber der Bereitstellungs- oder Kommunikationsentität 7.

Beispielsweise erfolgt das Erhalten der ersten Information über eine Kommunikationsverbindung zwischen dem Gerät 40 des Zustellers 4 und dem Gerät 80 des Adressaten 8. Das Aufbauen der Kommunikationsverbindung kann ebenfalls Bestandteil des Verfahrens 200 sein. Für das Aufbauen der Kommunikationsverbindung (beispielsweise zum Erhalten einer dazu erforderlichen Kommunikationsadresse des Adressaten 8) kann es erforderlich sein, dass eine erfolgreiche Authentisierung des Zustellers 4 oder dessen Geräts 40 gegenüber einer Vorrichtung, die zumindest im Zeitpunkt der Zustellung am Ort der Zustellung befindlich ist, stattgefunden hat.

Wenn festgestellt wird, dass keine erste Information erhalten oder erfasst wurde, überspringt das Verfahren 200 die Schritte 202 und 203 und endet. Anderenfalls wird in einem optionalen Schritt 202 geprüft, ob eine oder mehrere weitere notwendige Bedingungen erfüllt sind. Wenn dies der Fall ist, wird der Schritt 203 ausgeführt, anderenfalls wird der Schritt 203 übersprungen und das Verfahren 200 endet.

Im Schritt 203 wird die Sendung insbesondere an die Empfangsentität 6 zugestellt oder eine zweite Information insbesondere auf dem Gerät 40 angezeigt (z.B. als Hinweis auf einer Benutzerschnittstelle, z.B. einer Anzeigeeinheit) oder ausgegeben (z.B. als akustisches Signal). Aus der zweiten Information folgt, insbesondere für den Zusteller 4, dass die Sendung zugestellt werden darf.

Eine beispielhafte notwendige Bedingung, die in Schritt 202 geprüft werden kann, ist, dass zumindest ein Teil der ersten Information (insbesondere die gesamte erste Information) authentisch und/oder integer sein muss. Dies kann anhand von Prüfinformation, die beispielsweise in der ersten Information enthalten ist, geprüft werden, wie nachfolgend noch genauer erläutert wird.

Eine zusätzliche oder alternative beispielhafte Bedingung, die in Schritt 202 geprüft werden kann, ist, dass die angetroffene(n) Möglichkeit(en) zur Zustellung einer insbesondere vom Adressaten vorgegebenen Form der Zustellung gehorchen müssen. Dritte Information, die besagt, in welcher Form die Zustellung erfolgen kann, also beispielsweise in/an welche Orte/Räume und/oder an welche Personen die Zustellung bei Abwesenheit des Adressaten (vom Zustellungsort im Zustellungszeitpunkt) erfolgen darf, kann beispielsweise zusammen mit der ersten Information erhalten oder erfasst worden sein.

Wenn die erste Information Zahlungsinformation umfasst, ist eine zusätzliche oder alternative beispielhafte Bedingung, die in Schritt 202 geprüft werden kann, dass ein Bezahlungsvorgang für die Ware unter Verwendung der Zahlungsinformation erfolgreich abgeschlossen werden konnte oder dass eine Prüfung der Korrektheit der Zahlungsinformationen und/oder einer ausreichenden Deckung oder eines ausreichenden Zahlungsrahmens eines in den Zahlungsinformationen angegebenen Kontos erfolgreich verlaufen ist. Der Bezahlvorgang kann beispielsweise von dem Server 9 ausgeführt werden, insbesondere basierend auf den Zahlungsinformationen, die der Server 9 von dem Gerät 40 des Zustellers 4 erhalten hat. Der Server 9 wickelt die Bezahlung beispielsweise mit einem Server 10 der Bank oder einem Server 11 eines Kreditkartenunternehmens ab, um nur einige Beispiele zu nennen. Ein Ergebnis des Bezahlvorgangs wird dann vom Server 9 dem Gerät 40 übermittelt und kann bei der Prüfung im Schritt 202 verwendet werden. In ähnlicher Weise kann auch die Korrektheit der Zahlungsinformation und/oder die Deckung oder der Zahlungsrahmen des in der Zahlungsinformation angegebenen Kontos geprüft werden.

Fig. 3 ist ein Flussdiagramm einer beispielhaften Ausführungsform 300 eines Verfahrens gemäß dem zweiten Aspekt der vorliegenden Erfindung. Dieses Verfahren 300 wird beispielsweise vom Server 9 ausgeführt (der Schritt 301 beinhaltet dann beispielsweise das Erzeugen der ersten Information, und der Schritt 302 beinhaltet dann beispielsweise das Kommunizieren der ersten Information). Alternativ kann das Verfahren vom Gerät 80 des Adressaten 8 ausgeführt werden. Weiter alternativ kann das Verfahren von der Bereitstellungs- oder Kommunikationsentität 7 ausgeführt werden.

Im Schritt 301 wird erste Information erzeugt oder erhalten, die zumindest Zustellungszustimmungsinformation, Bezahlt-Information oder Zahlungsinformation umfasst. Insbesondere das Erzeugen der ersten Information in Schritt 301, oder alternativ das Kommunizieren der erzeugten ersten Information in Schritt 302, insbesondere an den Adressaten 8 oder an dessen Gerät 80, kann beispielsweise nur im Falle einer vorherigen positiv verlaufenen Prüfung erfolgen.

Falls die erste Information Zustellungszustimmungsinformation beinhaltet, kann beispielsweise geprüft werden, ob der Adressat als vertrauenswürdig eingestuft wird, also beispielsweise mit hoher Wahrscheinlichkeit die in der Sendung 3 enthaltene Ware auch nach erfolgter Zustellung bezahlen wird. Dies kann beispielsweise anhand eines Profils des Adressaten 8, das beispielsweise am Server 9 gespeichert und insbesondere dort gepflegt wird, entschieden werden. Das Profil beruht beispielsweise auf einer Bezahlungs-Historie einer oder mehrerer vorheriger Nachnahme-Sendungen, die an den Adressaten 8 gerichtet waren. Das Profil weist den Adressaten 8 beispielsweise als vertrauenswürdig aus, wenn dieser beispielsweise die drei letzten Nachnahme-Sendungen innerhalb einer jeweiligen Frist von 2 Wochen nach erfolgter Zustellung vollständig bezahlt hat.

Falls die erste Information Bezahlt-Information beinhaltet, kann beispielsweise geprüft werden, ob eine vollständige Bezahlung der Ware erfolgt ist.

Alternativ kann das Erzeugen der ersten Information im Schritt 301 auch als Reaktion auf einen erfolgreich abgeschlossenen Bezahlungsvorgang der in der Sendung 3 enthaltenen Ware ausgelöst werden.

Die Bezahlung der in der Sendung 3 enthaltenen Ware kann für den Adressaten 8 beispielsweise durch den Server 9 vorgenommen werden, beispielsweise basierend auf Zahlungsinformationen, die der Adressat 8 dem Server 9 für den aktuellen Bezahlvorgang (beispielsweise in einem Abfragedialog) mitgeteilt hat oder die der Adressat 8 am Server 9 hinterlegt hat. Die Bezahlung kann insbesondere automatisch erfolgen, wenn der Adressat 8 beispielsweise eine Nachnahme-Sendung in einer Liste von ein oder mehreren Nachnahme-Sendungen ausgewählt hat und die Aktion "automatische Bezahlung" gewählt hat. Diese Liste kann dem Adressat 8 beispielsweise auf einer Webseite des Servers 9 oder in einer Anwendung, die auf dem Gerät 80 des Adressaten 8 installiert ist und mit dem Server 9 kommuniziert, angezeigt werden. Wenn der Bezahlvorgang erfolgreich abgeschlossen wird, wird beispielsweise Bezahlt-Information erzeugt und kann dann im Schritt 302 bereitgestellt oder kommuniziert werden.

Der Server 9 kann beispielsweise eingerichtet sein, die Bezahlung für den Adressaten (insbesondere automatisch) mittels einer (beispielsweise von dem Adressanten 8 vorab ausgewählten) der folgenden Bezahlungsmethoden auszuführen: Bezahlung basierend auf Kreditkarteninformationen, Bezahlung per Lastschrift, Bezahlung per Überweisung, Bezahlung über einen Bezahlsystem-Anbieter (z.B. PayPal), bei dem die Person ein Konto besitzt, Bezahlung per PrePaid-Kreditkarte oder PrePaid-Code oder Bezahlung per Mobiltelefon-Rechnung.

Der Server 9 kann beispielsweise die Funktion eines bei Online-Shops üblichen Zahlungsdienstleisters übernehmen, also dem Adressaten 8 die Bezahlung der Ware gemäß einer oder mehrerer Bezahlungsmethoden ermöglichen. Beispielsweise greift der Server 9 dabei auf hinterlegte Zahlungsinformationen des Adressaten zurück, oder fragt diese bei jeder Bezahlung neu von dem Adressaten 8 ab. Beispielsweise werden die Zahlungen nicht auf das Konto des Versenders 3, sondern auf ein oder mehrere Konten des Zustellungsunternehmens gutgeschrieben und dann beispielsweise erst in einem nachgelagerten Prozess von diesen Konten dem jeweiligen Versender 2 gutgeschrieben. Dies kann den Bezahlungsprozess vereinfachen und/oder beschleunigen, da im Zeitpunkt der Bezahlung nicht sendungsspezifische/versenderspezifische Konteninformationen berücksichtigt werden müssen. Der Server 9 kommuniziert bei der Abwicklung der Bezahlung mit Servern von Banken 10, Kreditkartenunternehmen 11 oder Bezahldienstleistern (in Fig. 1 nicht dargestellt). Diese Server können beispielsweise Bezahlungsschnittstellen (sog. Payment Gateways) zur Verfügung stellen, mittels denen Bezahlungen vorgenommen werden können.

Soll die Bezahlung beispielsweise per Kreditkarteninformationen erfolgen, hat sich das Zustellungsunternehmen (das den Server 9 betreibt), beispielsweise bei einem Kreditkartenunternehmen registriert und eine Vertragsnummer erhalten. Zur Vornahme der Bezahlung leitet der Server 9 diese Vertragsnummer, die Kreditkarteninformationen (z.B. Kreditkartennummer und ggf. Sicherheitsnummer oder weitere Informationen) des Adressaten und Angaben zur Höhe des zu bezahlenden Betrags an den Server 11 des Kreditkartenunternehmens weiter, der Zugriff auf das Kreditkartenkonto des Adressaten 8 hat und die entsprechende Transaktion (Gutschrift des Betrags vom Konto des Adressaten auf das Konto des Zustellungsunternehmens) ausführt.

Soll die Bezahlung beispielsweise per Lastschrift erfolgen, überträgt der Server 9 die Kontoinformationen (insbesondere Kontonummer und Bankleitzahl) des Adressaten 8 sowie die Kontoinformationen des Zustellungsunternehmens an den Server 10 der Bank des Zustellungsunternehmens. Die Bank des Zustellungsunternehmens zieht die Lastschrift dann von der Bank des Adressaten ein und schreibt sie dem Konto des Zustellungsunternehmens gut.

Wenn der Adressat 8 jeweilige Zahlungsinformationen zur Verfügung stellt oder hinterlegt hat, kann der Server 9 auch Bezahlungen gemäß anderen Zahlungsmethoden durchführen (beispielsweise Bezahlungen über Bezahldienstleister, wenn die Zugangsdaten zum Konto des Adressaten 8 bei einem Bezahldienstleister dem Server 9 bekannt gemacht wurden).

Anstatt die Funktion des Zahlungsdienstleiters selbst zu übernehmen, kann der Server 9 diese Funktionalität allerdings auch zumindest teilweise von einem Zahlungsdienstleister ausfüllen lassen, der dann beispielsweise vom Server 9 mit den zur Vornahme der Zahlung erforderlichen Informationen versorgt wird und die Kommunikation mit den Servern 10 oder 11 übernimmt.

Alternativ kann dem Adressaten 8 auch angeboten werden, ein eigenes Konto beim Server 9 zu führen, dass bei Vorliegen der Bereitschaft des Adressaten 8, eine Ware zu bezahlen, entsprechend direkt belastet wird. Der Adressat 8 kann dieses Konto dann beispielsweise mittels Überweisung "aufladen". Dem Adressaten 8 kann auch ein gewisser Kreditrahmen eingeräumt werden, falls die Bezahlung einer Ware durch den aktuellen Kontostand nicht gedeckt ist. Auch in dieser Alternative kann die Bezahlung der Ware automatisch durchgeführt werden.

Als weitere Bezahlungsmethoden kann der Server 9 den Adressaten 8 bei Bezahlungsmethoden wie Bezahlung per Geldkarte (bei der üblicherweise eine Geldkarte in ein an ein Gerät der Person angeschlossenes Kartenlesegerät eingeführt und an diesem Kartenlesegerät eine PIN eingegeben werden muss) oder Bezahlung per Überweisung (bei der in der Regel ein transaktionsspezifischer Code, wie etwa eine mTAN oder Photo-TAN, auf einem separaten Kommunikationskanal im Zeitpunkt der Bezahlung an den Adressaten 8 geliefert wird und von diesem zur Vollendung der Transaktion angegeben werden muss), um nur ein paar Beispiele zu nennen, unterstützen.

Als Teil der ersten Information kann auch Prüfinformation erzeugt werden, die eine Prüfung der Authentizität und/oder Integrität zumindest eines Teils der ersten Information ermöglicht (der Teil umfasst beispielsweise einen Teil der ersten Information, auf den sich die Prüfinformation bezieht, und die Prüfinformation selbst). Die Prüfinformation kann beispielsweise eine Signatur (z.B. in Form eines verschlüsselten Hashwerts) oder einen Nachrichtenauthentifizierungscode (einen sog. Message Authentication Code (MAC), z.B. ein HMAC oder CMAC) über einen Teil der ersten Information (insbesondere über die Zustellungszustimmungsinformation, die Bezahlt-Information oder die Bezahlungsinformation) umfassen. Die Prüfinformation (insbesondere in Form einer Signatur) kann beispielsweise auf einem privaten kryptographischen Schlüssel beruhen, der nur der Vorrichtung, die die Prüfinformation erzeugt, bekannt ist, beispielsweise also dem Server 9. Die Authentizität und/oder Integrität der ersten Information kann dann beispielsweise anhand eines zu diesem privaten Schlüssel korrespondierenden Schlüssels, z.B. eines öffentlichen Schlüssel, der mit dem privaten Schlüssel ein asymmetrisches Schlüsselpaar bildet, geprüft werden, beispielsweise auf dem Gerät 40 des Zustellers 4. Alternativ können die Vorrichtung, die die Prüfinformation erzeugt (z.B. der Server 9), und die Vorrichtung(en), die die Prüfinformation (insbesondere einen Nachrichtenauthentifizierungscode) zur Prüfung verwenden, beide jeweils über den gleichen Schlüssel verfügen.

Die erste Information kann beispielsweise die Zustellungszustimmungsinformation, die Bezahlt-Information oder die Zahlungsinformation in Textform enthalten (z.B. als ASCII-Zeichen).

Die Zustellungszustimmungsinformation kann beispielsweise folgenden Inhalt aufweisen:
"Adressat <Name, Vorname> stimmt der Zustellung der Nachnahme-Sendung <Sendungskennung> auch in seiner Abwesenheit zu, Bezahlung erfolgt später".

Hinzutreten kann dritte Information, beispielsweise:
"Adressat <Name, Vorname> stimmt der Zustellung der Nachnahme-Sendung <Sendungskennung> in seinen Paketkasten auch in seiner Abwesenheit zu, Bezahlung erfolgt später".
Die Zustellungszustimmungsinformation kann allerdings auch noch mehr oder weniger Informationen umfassen, beispielsweise nur eine Kennung der Sendung.

Die Bezahlt-Information kann beispielsweise folgenden Inhalt aufweisen:
"Nachnahme-Sendung <Sendungskennung> wurde bereits vollständig bezahlt."

Die Bezahlt-Information kann zusätzlich auch die Zustimmung des Adressaten 8 zur Zustellung der Sendung 3 auch in seiner Abwesenheit zum Ausdruck bringen, und ggf. auch dritte Information zur zulässigen Form der Zustellung umfassen:
"Nachnahme Sendung <Sendungskennung> wurde bereits vollständig bezahlt und kann auch bei Abwesenheit des Adressaten <Name, Vorname> in dessen Paketkasten zugestellt werden."

Die Zahlungsinformation kann beispielsweise folgenden Inhalt aufweisen:
"Der Betrag <Betrag> für die Nachnahme-Sendung <Sendungskennung> darf vom Konto <Kontonummer, Bankleitzahl> des <Name, Vorname> per Lastschrift abgebucht werden."
Derartige erste Information kann von dem Zusteller 4 leicht erfasst werden, wenn sie beispielsweise auf einer Benutzerschnittstelle seines Geräts 40 angezeigt wird.

Zusätzlich oder alternativ kann die erste Information in einem zur maschinellen Verarbeitung besser geeigneten vordefinierten Format repräsentiert sein, beispielsweise in binärer Form mit aufeinander folgenden Feldern jeweils festgelegter Länge mit folgenden Informationen (alternativ können Felder variabler Länge mit Feldtrennzeichen eingesetzt werden), z.B.:
Informationstyp |Sendungskennung| |Zustellungsform| ...

Der Informationstyp gibt dann beispielsweise an, um welche Art von erster Information es sich handelt (z.B. anhand von zwei Bits: "00": Zustellungszustimmungsinformation, "01": Bezahlt-Information, "10": Zahlungsinformation, "11": reserviert). Das Format der ersten Information kann beispielsweise vom Informationstyp abhängen, also jeweils nur Felder für diejenigen Information beinhalten, die benötigt werden.

Das Feld des Informationstyps kann entbehrlich sein, wenn im System 1 der Fig. 1 jeweils nur der Einsatz einer Art von erster Information, also beispielsweise nur der Zustellungszustimmungsinformation, nur der Bezahlt-Information oder nur der Zahlungsinformation, unterstützt wird. Dann kann je nach Art der ersten Information ein optimiertes Format für die erste Information verwendet werden.

Entsprechend kann auch ein Feld für die Prüfinformation in den oben beschriebenen Formaten vorhanden sein.

Alternativ kann die erste Information auch lediglich als erster Code erzeugt werden, zu dem ein zweiter Code, der beispielsweise mit der Sendung assoziiert ist (beispielsweise auf die Sendung aufgedruckt oder in einer Datenbank (z.B. am Server 9) zusammen mit einer Kennung der Sendung, mit der er assoziiert ist, abrufbar gespeichert ist) korrespondiert. Der zweite Code stimmt beispielsweise mit dem ersten Code überein. Wenn dann beispielsweise vom Zusteller 4 oder dessen Gerät 40, z.B. bei der Zustellung, der erste Code von der Bereitstellungs- oder Kommunikationsentität 7 erfasst oder erhalten wird, und dieser erste Code zu dem zweiten Code, der beispielsweise im Gerät 40 des Zustellers 4 zusammen mit der Kennung der Sendung 3 gespeichert und bei Kenntnis der Kennung der Sendung 3 (die beispielsweise auf der Sendung 3 oder auf einem Etikett der Sendung aufgedruckt und vom Gerät 40 erfassbar ist) im Gerät 40 des Zustellers auffindbar ist, korrespondiert, kann davon ausgegangen werden, dass der erste Code (und damit die erste Information) authentisch und integer ist. Die zweiten Codes werden beispielsweise täglich für die an diesem Tag durch den Zusteller 4 zuzustellenden Sendungen zusammen mit den zugehörigen Sendungskennungen auf das Gerät 40 des Zustellers 4 geladen und dazu beispielsweise vom Server 9 bereitgestellt.

Wenn im System 1 der Fig. 1 mehrere Arten der ersten Information, also beispielsweise Zustellungszustimmungsinformation und Bezahlt-Information, unterstützt werden, können beispielsweise jeweils für eine Sendung mehrere erste Codes erzeugt werden, wobei jeder der ersten Codes eine andere Art der ersten Information repräsentiert und es einen jeweils korrespondierenden zweiten Code gibt. Es ist auch möglich, pro Art der ersten Information (also beispielsweise für Zustellungszustimmungsinformation) mehrere erste Codes und entsprechend korrespondierende zweite Codes zu erzeugen, die dann beispielsweise neben dem Informationsgehalt, dass der Zustellung der Sendung auch in Abwesenheit des Adressaten zugestimmt wird, oder dass eine in einer Sendung enthaltene Ware bezahlt wurde, auch unterschiedliche weitere Informationen, beispielsweise unterschiedliche dritte Information (also in welcher Form die Zustellung erfolgen darf) kodieren können. Beispielsweise werden die ersten Codes (und die dazu korrespondierenden zweiten Codes) als zufällige oder pseudozufällige Codes erzeugt und sind jeweils mit unterschiedlicher dritter Information assoziiert. Dem Gerät 40 wird dann beispielsweise für jede Sendung, die der Zusteller an einem Tag zuzustellen hat, ein Satz von mehreren zweiten Codes mit einer Information über die jeweils von dem zweiten Code repräsentierte dritte Information zur Verfügung gestellt. Wenn durch den Zusteller 4 oder dessen Gerät 40 dann, beispielsweise bei der Zustellung der Sendung 3, ein erster Code von der Bereitstellungs- oder Kommunikationsentität 7 erfasst oder erhalten wird, kann anhand der Kennung der Sendung 3 (die beispielsweise mit dem Gerät 40 von der Sendung 3 oder einem Etikett der Sendung 3 erfasst werden kann) im Gerät 40 der Datensatz mit den zweiten Codes für diese Sendung 3 identifiziert werden und entschieden werden, ob einer der zweiten Codes zu dem erfassten/erhaltenen ersten Code korrespondiert. Wenn dies der Fall ist, wird die zu diesem zweiten Code gehörige dritte Information ermittelt und bei der Prüfung, ob die Sendung unter den vorgefundenen Zuständen zugestellt werden kann, verwendet.

Die Erzeugung der ersten Information kann, wie bereits am Beispiel der Bezahlt-Information angesprochen wurde, beispielsweise durch Interaktion des Adressaten 8 mit einer Webseite, die als Schnittstelle zum Server 9 dient und auf einem Browser des Geräts 80 aufgerufen wird, oder durch eine auf dem Gerät 80 des Adressaten 8 installierte Anwendung, die mit dem Server 9 kommuniziert, ausgelöst werden. Beispielsweise hat der Adressat 8 auf der Webseite oder in der Anwendung die Möglichkeit, sich Informationen über die aktuell an ihn zuzustellenden ein oder mehreren Sendungen 3 anzusehen (beispielsweise deren Zustellungsstatus). Die Webseite oder die Anwendung kann also beispielsweise einen Sendungsverfolgungsservice implementieren. Beispielsweise wird es dem Adressaten 8 ermöglicht, auf der Webseite oder in der Anwendung die Erzeugung von Zustellungszustimmungsinformation auszulösen. Dabei können dann weitere Informationen, insbesondere die dritte Information, mit denen der Adressat 8 definieren kann, in welcher Form die Zustellung in seiner Abwesenheit erfolgen darf, vom Adressaten 8 abgefragt oder von diesem ausgewählt werden. In diesem Prozess kann der Adressat 8 auch aufgefordert werden, explizit (und insbesondere rechtsverbindlich) seine Zustimmung zur Zustellung einer betreffenden Sendung trotz seine Abwesenheit vom Zustellungsort im Zustellungszeitpunkt zu erklären, beispielsweise durch Betätigung einer Schaltfläche (z.B. "Ich stimme der Zustellung der Sendung <Sendungskennung> auch im Falle meiner Abwesenheit zu.") oder durch Abgabe einer elektronischen Unterschrift. Wenn die Zustellungszustimmungsinformation in dieser Art am Server 9 erzeugt wird und ggf. mit Prüfinformation zur Prüfbarkeit ihrer Authentizität und Integrität versehen wird, kann der Zusteller 4 bei Erhalt/Erfassung derartiger Zustellungszustimmungsinformation sicher sein, dass er die Sendung 3 trotz der Abwesenheit des Adressaten 8 zustellen kann. Zusätzlich oder alternativ kann es dem Adressaten 8 auf der Webseite oder in der Anwendung ermöglicht werden, Waren aus Sendungen, die an den Adressaten zuzustellen sind, zu bezahlen (beispielsweise unter der Kontrolle des Servers 9 wie oben beschrieben), so dass nach erfolgter Bezahlung Bezahlt-Information erzeugt werden kann. Zusätzlich oder alternativ kann dem Adressaten 8 auch die Möglichkeit gegeben werden, Zahlungsinformation anzugeben, aus der dann ebenfalls erste Information erzeugt werden kann.

Beispielsweise wird der Adressat 8 durch eine Nachricht darauf hingewiesen, dass sich zumindest eine für ihn bestimmte Nachnahme-Sendung im Zustellungsprozess befindet, deren Ware noch nicht bezahlt wurde. Die Nachricht kann beispielsweise an eine für den Adressaten im Server 9 hinterlegte Kommunikationsadresse (z.B. eine E-Mail-Adresse oder Mobiltelefonnummer) gerichtet werden. Die Nachricht kann beispielsweise eine Verknüpfung zu einer Webseite oder einer Anwendung (z.B. die im vorigen Absatz beschriebene Webseite oder Anwendung) enthalten, auf/mit der der Adressat 8 für die Sendung (oder eine andere Sendung) erste Information, also insbesondere Zustellungszustimmungsinformation, Bezahlt-Information oder Zahlungsinformation erzeugen (lassen) kann. Das Versenden der Nachricht wird beispielsweise durch ein Ereignis im Zustellungsprozess ausgelöst, insbesondere automatisch. Das Ereignis kann beispielsweise das erfasste Passieren der Sendung einer vorbestimmten Station sein, beispielsweise einer Scan-Station, an der Daten der Sendung (beispielsweise eine Kennung der Sendung) insbesondere optisch erfasst werden.

Im Schritt 302 wird die erste Information dann bereitgestellt oder kommuniziert. Wenn die erste Information vom Server 9 erzeugt wurde, erfolgt das Kommunizieren beispielsweise durch Übertragen an das Gerät 80 des Adressaten. Das Kommunizieren der ersten Information erfolgt hier beispielsweise im Rahmen der Kommunikation des Geräts 80 und des Servers 9 bei der Interaktion des Adressaten 8 mit der Webseite oder im Rahmen der Kommunikation zwischen der auf dem Gerät 80 installierten Anwendung und dem Server 9. Das Kommunizieren der ersten Information kann beispielsweise basierend auf dem Internet-Protokoll erfolgen. Die Übertragung kann beispielsweise auf einer drahtgebundenen Verbindung oder zumindest teilweise auf einer drahtlosen Verbindung (insbesondere, wenn es sich bei dem Gerät 80 des Adressaten um ein mobiles elektronisches Gerät handelt) beruhen.

Die erhaltene erste Information kann dann beispielsweise dem Adressaten 8 über eine Benutzerschnittstelle des Geräts 80 angezeigt werden.

Der Adressat 8 kann die erste Information beispielsweise dem Zusteller 4 mitteilen oder in das Gerät 40 des Zustellers 4 eingeben oder der Bereitstellungs- oder Kommunikationsentität 7 mitteilen (insbesondere, wenn es sich dabei um eine Person handelt, insbesondere eine Person, die auch als Empfangsentität 6 fungieren kann) oder in die als Vorrichtung ausgebildete Bereitstellungs- oder Kommunikationsentität 7 eingeben (beispielsweise über eine Benutzerschnittstelle). Die Mitteilung an den Zusteller 4 kann beispielsweise im Zeitpunkt der Zustellung erfolgen, insbesondere direkt an den Zusteller 4 oder über eine Kommunikationsverbindung, insbesondere eine Mobilfunkverbindung, zwischen dem Gerät 40 des Zusteller 4 und dem Gerät 80 des Adressaten 8. Beispielsweise baut der Zusteller 4 mit seinem Gerät 40 im Zeitpunkt der Zustellung, wenn er den Adressaten am Ort der Zustellung nicht antrifft, eine Kommunikationsverbindung zu dem Adressaten 8 auf, um von diesem die erste Information zu erhalten (insbesondere Bezahlt-Information oder Zahlungsinformation). Die Kommunikationsadresse des Adressaten 8 zum Aufbau der Kommunikationsverbindung erhält der Zusteller 4 bzw. dessen Gerät beispielsweise von einer Vorrichtung, die am Ort der Zustellung installiert oder zumindest für den Zeitpunkt der Zustellung dort platziert wurde, beispielsweise erst nach erfolgreicher Authentisierung des Zustellers gegenüber der Vorrichtung. Alternativ gibt die Vorrichtung die Kommunikationsadresse des Adressaten 8 nicht heraus, sondern baut direkt (beispielsweise erst nach erfolgreicher Authentisierung des Zustellers 4 oder dessen Geräts 40) eine Kommunikationsverbindung zum Gerät 80 des Adressaten 8 auf und fungiert dabei als Endgerät, das der Zusteller 4 nutzen kann, um mit dem Adressaten 8 zu kommunizieren und die erste Information zu erhalten. Die Vorrichtung kann Teil einer als Vorrichtung ausgebildeten Empfangsentität 6 (z.B. einem Brief- und/oder Paketkasten) oder operativ mit einer solchen Vorrichtung (insbesondere deren Steuereinheit) verbunden sein.

Alternativ kann die an das Gerät 80 kommunizierte erste Information weiter an die Bereitstellungs- oder Kommunikationsentität 7 (oder an eine mit dieser operativ verbundenen Vorrichtung) übertragen werden, beispielsweise durch drahtgebundene Übertragung (z.B. über eine Universal Serial Bus (USB) Verbindung oder eine Local Area Network (LAN) Verbindung) oder zumindest teilweise drahtlose Übertragung (z.B. mittels einer Wireless Local Area Network (WLAN)-Verbindung, einer Bluetooth-Verbindung, einer Near Field Communication (NFC) Verbindung oder einer zellularen Mobilfunkverbindung, um nur ein paar Beispiele zu nennen). Es ist auch denkbar, dass die erste Information auf eine Speicherkarte des Geräts 80 gespeichert wird und diese Speicherkarte dann in die Bereitstellungs- oder Kommunikationsentität 7 eingesetzt wird.

Wie bereits erläutert repräsentiert das Flussdiagramm des Verfahrens 300 der Fig. 3 auch die Aktionen des Adressaten 8 oder dessen Geräts 80. Im Schritt 301 wird die erste Information erhalten, beispielsweise vom Server 9, wenn das Verfahren 300 durch das Gerät 80 ausgeführt wird, oder vom Gerät 80, wenn das Verfahren 300 durch den Adressaten 8 ausgeführt wird. Im Schritt 302 wird die erste Information kommuniziert/bereitgestellt, beispielsweise an die als Vorrichtung ausgebildete Bereitstellungs- oder Kommunikationsentität 7 oder an das Gerät 40 des Zustellers 4, wenn das Verfahren durch das Gerät 80 ausgeführt wird, oder an die als Person ausgebildete Bereitstellungs- oder Kommunikationsentität 7 oder an den Zusteller 4 oder an dessen Gerät 40, wenn das Verfahren 300 durch den Adressaten 8 durchgeführt wird.

Schließlich repräsentiert das Flussdiagramm des Verfahrens 300 der Fig. 3 auch die Verarbeitung an der Bereitstellungs- oder Kommunikationsentität 7. Im Schritt 301 wird die erste Information erhalten, beispielsweise von dem Gerät 80 des Adressaten 8 oder von dem Adressaten 8. Im Schritt 302 wird die erste Information bereitgestellt oder kommuniziert, insbesondere um ein Erfassen oder Erhalten durch den Zusteller 4 oder dessen Gerät 40 zu ermöglichen.

Wenn es sich bei der Bereitstellungs- oder Kommunikationsentität 7 um eine Person handelt, kann das Bereitstellen oder Kommunizieren der ersten Information beispielsweise dadurch erfolgen, dass die Person dem Zusteller 4 die erste Information mitteilt oder in das Gerät 40 des Zustellers 4 eingibt.

Wenn es sich bei der Bereitstellungs- oder Kommunikationsentität 7 um eine Vorrichtung handelt, kann das Bereitstellen oder Kommunizieren beispielsweise durch zumindest zeitweise Anzeige einer optischen Repräsentation der ersten Information oder durch Ausgabe einer akustischen Repräsentation der ersten Information erfolgen. Die optische Repräsentation kann beispielsweise eine numerische, alphabetische oder alphanumerische Repräsentation sein, so dass der Zusteller 4 diese erfassen kann. Alternativ kann die optische Repräsentation beispielsweise ein Barcode sein (z.B. ein eindimensionaler oder zweidimensionaler Barcode, wie beispielsweise ein QR-Code oder Datamatrix-Code). Die optische Repräsentation kann insbesondere mit einer Erfassungseinheit des Geräts 40 des Zustellers 4 erfassbar sein. Diese Erfassungseinheit wird beispielsweise auch verwendet, um auf einer Sendung 3 oder einem Etikett der Sendung 3 aufgedruckte Information optisch zu erfassen. Die optische Repräsentation der ersten Information kann beispielsweise auf einer elektronischen Anzeigeeinheit angezeigt werden, beispielsweise auf einer auf elektronischer Tinte beruhenden Anzeigeeinheit mit niedrigem Energieverbrauch. Die Anzeigeeinheit ist insbesondere dergestalt am Ort der Zustellung installiert oder platziert, dass sie für den Zusteller 4 leicht erkennbar ist, beispielsweise auf oder an einer Brief- und/oder Paketkastenanlage, an einem Hauseingang, auf oder in einer Gegensprechanlage, auf oder in einer Benutzerschnittstelle eines Hausautomatisierungs- oder Zugangskontrollsystems, etc. Die optische Anzeigeeinheit zeigt die erste Information beispielsweise erst auf Anforderung durch den Zusteller 4 oder dessen Gerät 40 an, beispielsweise in Reaktion auf die Betätigung eines Bedienelements der Anzeigeeinheit oder einer damit verbunden Vorrichtung, oder in Reaktion darauf, dass festgestellt wurde, dass sich das Gerät 40 des Zustellers 4 in der Nähe der optischen Anzeigeeinheit befindet.

Das Bereitstellen oder Kommunizieren der ersten Information kann durch die Entität 7 auch dadurch erfolgen, dass die erste Information drahtlos ausgesendet wird, beispielsweise in regelmäßigen Abständen und/oder auf Anforderung durch das Gerät 40 und/oder bei Erfassung einer Annährung des Geräts 40. Die erste Information kann auch in einem Speicherelement der Bereitstellungs- oder Kommunikationsentität 7 gespeichert und dort drahtlos auslesbar sein. Das drahtlose Aussenden/Auslesen kann beispielsweise über eine WLAN-Verbindung, eine Bluetooth-Verbindung, eine NFC-Verbindung, eine zellulare Mobilfunkverbindung oder andere drahtlose Verbindungen erfolgen.

Die Anzeige oder Ausgabe bzw. das Aussenden oder ein Ermöglichen des Auslesens erfolgt beispielsweise nur, falls sich der Zusteller 4 oder dessen Gerät 40 erfolgreich gegenüber der Bereitstellungs- oder Kommunikationsentität 7 oder einer damit operativ verbundenen Vorrichtung authentisiert hat. Eine derartige Authentisierung des Zustellers 4 oder dessen Geräts 40 kann beispielsweise im Prozess der Zustellung der Sendung an/in die Empfangsentität 6 ohnehin erforderlich sein, beispielsweise um Zugang zu einem insbesondere verschließbaren Aufbewahrungsraum der Empfangsentität 6 (z.B. eines Brief- und/oder Paketkastens, eines Fahrzeugs, eines Gebäudes oder einer Schließfachanlage, insbesondere einer Packstation) zu erhalten. Vorteilhaft muss sich dann der Zusteller 4 oder dessen Gerät 40 nur einmal authentisieren, um Zugang zu dem Aufbewahrungsfach zu erhalten und die erste Information erhalten oder erfassen zu können.

Die erste Information wird bevorzugt nach erfolgter Zustellung der Sendung 3 in der Bereitstellungs- oder Kommunikationsentität 7 gelöscht und wird dann nicht mehr bereitgestellt/kommuniziert. Dadurch wird, insbesondere bei Bereitstellung der ersten Information als optische Repräsentation, verhindert, dass Dritte auf die erfolgte Zustellung der möglicherweise wertvollen Sendung 3 hingewiesen werden. Dies ist insbesondere vorteilhaft, wenn die Zustellung in einen Aufbewahrungsraum (z.B. einer Brief- und/oder Paketkastenanlage, eines Fahrzeugs oder Gebäudes oder einer Packstation) oder an einem dem Adressaten 8 zugänglichen Aufbewahrungsort, insbesondere einen Teil eines Grundstücks des Adressaten 8 wie beispielsweise eine Terrasse, zugestellt wurde. Beispielsweise erhält die Entität 7 nach erfolgter Zustellung eine Information von der Empfangsentität 6, dass die Zustellung der Sendung 3 erfolgt ist und die darauf bezogene (beispielsweise durch eine Sendungskennung identifizierbare) erste Information gelöscht werden kann und/oder nicht mehr bereitgestellt/kommuniziert werden soll.

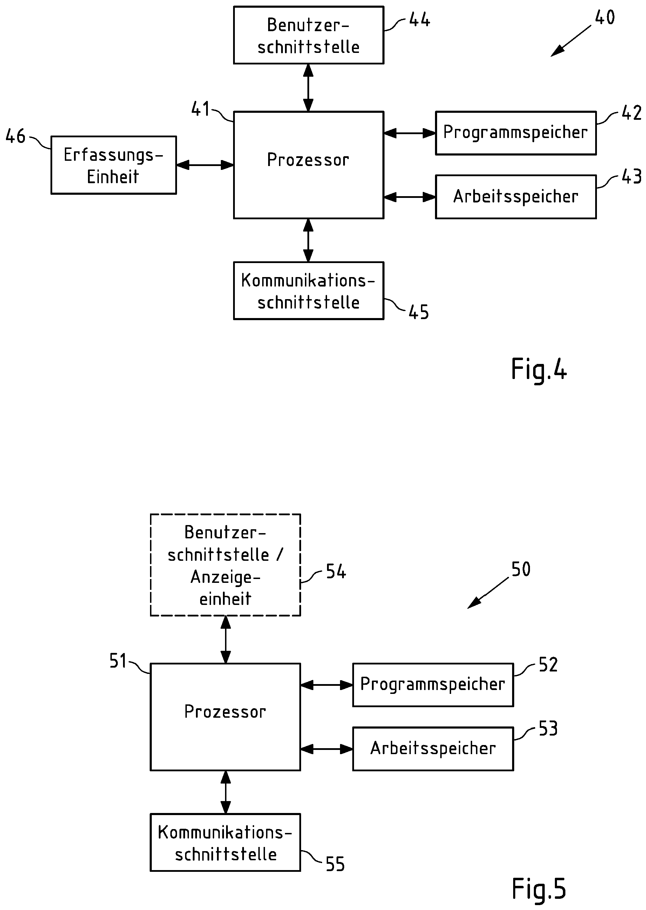

Fig. 4 zeigt eine schematische Darstellung einer beispielhaften Ausführungsform einer Vorrichtung 40 gemäß dem ersten Aspekt der Erfindung. Es handelt sich dabei insbesondere um das Gerät 40 des Zustellers 4, das beispielsweise als portables elektronisches Gerät, insbesondere als Handscanner oder Mobiltelefon ausgebildet sein kann. Die Vorrichtung 40 kann beispielsweise zur Ausführung und/oder Steuerung des Verfahrens 200 der Fig. 2 ausgebildet sein.

Vorrichtung 40 umfasst einen Prozessor 41 mit zugeordnetem Arbeitsspeicher 43 und Programmspeicher 42. Der Prozessor 41 führt beispielsweise Programmanweisungen aus, die im Programmspeicher 42 gespeichert sind. Die Programmanweisungen führen das Verfahren gemäß dem ersten Aspekt der Erfindung aus und/oder steuern dieses. Damit enthält der Programmspeicher 42 ein Computerprogramm nach dem ersten Aspekt der Erfindung und stellt ein Computerprogrammprodukt zu dessen Speicherung dar.

Der Programmspeicher 42 kann beispielsweise ein persistenter Speicher, wie beispielsweise ein Read-Only-Memory (ROM)-Speicher sein. Der Programmspeicher 42 kann beispielsweise fest mit dem Prozessor 41 verbunden sein, kann aber alternativ auch lösbar mit dem Prozessor 41 verbunden sein, beispielsweise als Speicherkarte, Diskette oder optisches Datenträgermedium (z.B. eine CD oder DVD). In dem Programmspeicher 42, oder in einem separaten Speicher, können auch weitere Informationen abgespeichert sein.

Der Arbeitsspeicher 43 wird beispielsweise zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher.

Der Prozessor 41 ist ferner operativ mit einer Kommunikationsschnittstelle 45 verbunden, mit der beispielsweise ein Informationsaustausch mit anderen Vorrichtungen möglich ist (siehe hierzu die gestrichelten Pfeile in Fig. 1). Die Kommunikation mit den anderen Vorrichtungen kann drahtgebunden oder zumindest abschnittsweise drahtlos erfolgen. Die Kommunikationsschnittstelle 45 kann mehrere unterschiedliche Kommunikationsstandards unterstützten, beispielsweise WLAN, Bluetooth, NFC, USB, Ethernet, zellularer Mobilfunk, etc.

Die Vorrichtung 40 umfasst des Weiteren eine Erfassungseinheit 46, die beispielsweise als optische Erfassungseinheit ausgebildet sein kann. Die optische Erfassungseinheit ist beispielsweise zum Erfassen von Informationen, die auf eine Sendung 3 oder ein Etikett einer Sendung 3 aufgedruckt sind, und/oder zur Erfassung einer optischen Repräsentation der ersten Information in der Lage. Beispielsweise ist die optische Erfassungseinheit zum Erfassen (und beispielsweise auch zum Auswerten) von Barcodes eingerichtet.

Die Vorrichtung 40 umfasst ferner eine Benutzerschnittstelle 44, die von dem Prozessor 41 gesteuert wird und die Interaktion des Zustellers 4 mit der Vorrichtung 40 erlaubt. Die Benutzerschnittstelle 44 kann beispielsweise zur Anzeige der zweiten Information dienen. Die Benutzerschnittstelle 44 kann beispielsweise eine elektronische Anzeigevorrichtung umfassen. Diese kann beispielsweise als berührungsempfindliche Anzeigevorrichtung ausgebildet sein, beispielsweise um die Eingabe von Information, beispielsweise der ersten Information durch den Adressaten 8, zu ermöglichen.

Fig. 5 zeigt schließlich eine schematische Darstellung einer beispielhaften Ausführungsform einer Vorrichtung 50 gemäß dem zweiten Aspekt der Erfindung. Es kann sich dabei insbesondere um den Server 9, um das Gerät 80 des Adressaten oder um die Bereitstellungs- oder Kommunikationsentität 7 (soweit diese als Vorrichtung ausgebildet ist) handeln. Die Vorrichtung 50 kann beispielsweise zur Ausführung und/oder Steuerung des Verfahrens 300 der Fig. 3 ausgebildet sein. Vorrichtung 50 umfasst einen Prozessor 51 mit zugeordnetem Arbeitsspeicher 53 und Programmspeicher 52. Der Prozessor 51 führt beispielsweise Programmanweisungen aus, die im Programmspeicher 52 gespeichert sind. Die Programmanweisungen führen das Verfahren gemäß dem zweiten Aspekt der Erfindung aus und/oder steuern dieses. Damit enthält der Programmspeicher 52 ein Computerprogramm nach dem zweiten Aspekt der Erfindung und stellt ein Computerprogrammprodukt zu dessen Speicherung dar.

Hinsichtlich der Ausbildung des Programmspeichers 52, des Arbeitsspeichers 53 und der Kommunikationsschnittstelle 55 wird auf die diesbezüglichen Ausführungen zu den entsprechenden Komponenten 42,43 und 45 der Fig. 4 verwiesen.

Je nachdem, welche der Vorrichtungen 9, 7 oder 80 die Vorrichtung 50 repräsentiert, können auch weitere Komponenten vorhanden sein. Falls die Vorrichtung 50 das Gerät 80 des Adressaten 8 repräsentiert, kann insbesondere eine Benutzerschnittstelle 54, beispielsweise in Form einer berührungsempfindlichen Anzeige, vorhanden sein. Falls die Vorrichtung 50 die Bereitstellungs- oder Kommunikationsentität 7 repräsentiert, kann beispielsweise eine Anzeigeeinheit 54 vorhanden sein, mittels der die erste Information bereitgestellt wird.

Die in dieser Spezifikation beschriebenen beispielhaften Ausführungsformen / Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, umfassend:
- Erhalten oder Erfassen erster Information durch einen Zusteller oder ein Gerät des Zustellers, wobei die erste Information zumindest folgendes umfasst:
- Zustellungszustimmungsinformation, aus der folgt oder ableitbar ist, dass eine Person der Zustellung einer zumindest unter Verwendung der Zustellungszustimmungsinformation identifizierbaren Sendung trotz Abwesenheit der Person zustimmt, wobei die Sendung eine Ware enthält, die im Falle der Zustellung bezahlt werden muss;
- Bezahlt-Information, aus der folgt oder ableitbar ist, dass eine Bezahlung einer Ware, die in einer zumindest unter Verwendung der Bezahlt-Information identifizierbaren Sendung enthalten ist, erfolgt ist; oder
- Zahlungsinformation, mit der eine Bezahlung einer in einer Sendung enthaltenen Ware zu Lasten einer Person, insbesondere ohne weitere Beteiligung der Person, vorgenommen werden kann und darf; und
- Zustellen der Sendung oder Anzeigen oder Ausgeben einer zweiten Information, aus der folgt, dass die Sendung zugestellt werden darf, wobei das Erhalten oder Erfassen der ersten Information notwendige Bedingung dafür ist, dass das Zustellen der Sendung oder das Anzeigen oder Ausgeben der zweiten Information durchgeführt wird.

2. Verfahren, umfassend:
- Erhalten oder Erzeugen erster Information, wobei die erste Information zumindest folgendes umfasst:
- Zustellungszustimmungsinformation, aus der folgt oder ableitbar ist, dass eine Person der Zustellung einer zumindest unter Verwendung der Zustellungszustimmungsinformation identifizierbaren Sendung trotz Abwesenheit der Person zustimmt, wobei die Sendung eine Ware enthält, die im Falle der Zustellung bezahlt werden muss;
- Bezahlt-Information, aus der folgt oder ableitbar ist, dass eine Bezahlung einer Ware, die in einer zumindest unter Verwendung der Bezahlt-Information identifizierbaren Sendung enthalten ist, erfolgt ist; oder
- Zahlungsinformation, mit der eine Bezahlung einer in einer Sendung enthaltenen Ware zu Lasten einer Person ohne weitere Beteiligung der Person vorgenommen werden kann und darf; und
- Bereitstellen oder Kommunizieren der ersten Information, wobei ein Erfassen oder Erhalten der bereitgestellten oder kommunizierten ersten Information durch einen Zusteller oder ein Gerät des Zustellers notwendige Bedingung dafür ist, dass die Sendung durch den Zusteller zugestellt wird.

3. Verfahren nach einem der vorhergehenden Ansprüche, wobei die erste Information von oder an einer ersten Vorrichtung bereitgestellt und durch das Gerät des Zustellers erfasst wird, oder die erste Information von einer ersten Vorrichtung kommuniziert und von dem Gerät des Zustellers erhalten wird.

4. Verfahren nach Anspruch 3, wobei sich die erste Vorrichtung an demjenigen Ort befindet, an dem die Zustellung der Sendung erfolgt.

5. Verfahren nach einem der Ansprüche 3-4, wobei die erste Vorrichtung Teil einer zweiten Vorrichtung oder operativ mit der zweiten Vorrichtung verbunden ist, und wobei die zweite Vorrichtung eine Brief- und/oder Paketkastenanlage mit einem oder mehreren Fächern zur Aufnahme von Sendungen auch bei Abwesenheit des Empfängers, ein Gebäudeautomatisierungs- oder -steuerungssystem, ein Zugangskontrollsystem für Gebäude oder Fahrzeuge, ein Türkommunikationssystem oder ein elektronisches Anzeigeschild ist.

6. Verfahren nach einem der Ansprüche 3-5, wobei die erste Information von einer dritten Vorrichtung, insbesondere einem Server oder einem Gerät einer Person, für die die Sendung bestimmt ist, erzeugt und mittelbar oder unmittelbar an die erste Vorrichtung oder an eine zweite Vorrichtung, die mit der ersten Vorrichtung operativ verbunden ist, übertragen wird, oder die erste Information von einem Server erzeugt wird, an ein Gerät einer Person, für die die Sendung bestimmt ist, übertragen wird und von dem Gerät an die erste Vorrichtung oder an eine zweite Vorrichtung, die mit der ersten Vorrichtung operativ verbunden ist, übertragen wird.

7. Verfahren nach einem der Ansprüche 1-2, wobei die erste Information von einer Person in ein Gerät des Zustellers eingegeben oder dem Zusteller mitgeteilt oder gezeigt wird, oder dem Zusteller von einer Person im Rahmen einer Kommunikation, die auf Telefonie, Videotelefonie oder elektronischen Nachrichten mit Text und/oder Bildern beruht, mitgeteilt wird, wobei insbesondere eine Kommunikationsadresse für den Aufbau der Kommunikation mit der Person für den Zusteller oder dessen Gerät am Ort der Zustellung bereitgestellt oder an diesen/dieses kommuniziert wird, oder insbesondere eine Kommunikationsadresse für den Aufbau der Kommunikation mit der Person in einer Vorrichtung gespeichert ist, die sich am Ort der Zustellung der Sendung befindet und die Kommunikation zwischen dem Zusteller und der Person aufbaut, insbesondere ohne dass die Kommunikationsadresse dem Zusteller oder dessen Gerät bekannt wird..

8. Verfahren nach einem der vorhergehenden Ansprüche, wobei die erste Information unter Verwendung einer Kennung der Sendung, insbesondere einer Sendungsverfolgungsnummer für die Sendung, erzeugt wird.

9. Verfahren nach einem der vorhergehenden Ansprüche, soweit auf Anspruch 1 rückbezogen, wobei die erste Information Prüfinformation umfasst, die es ermöglicht, die Authentizität und/oder Integrität zumindest eines Teils der ersten Information zu prüfen, das Verfahren ferner umfassend:
- Prüfen der Authentizität und/oder Integrität zumindest eines Teils der ersten Information zumindest basierend auf der Prüfinformation, wobei ein positives Ergebnis des Prüfens eine weitere notwendige Bedingung dafür ist, dass das Zustellen der Sendung oder das Anzeigen oder Ausgeben der zweiten Information durchgeführt wird.

10. Verfahren nach einem der Ansprüche 1-9, wobei die erste Information zumindest die Zustellungszustimmungsinformation oder die Bezahlt-Information in Form eines ersten Codes umfasst, und wobei ein zweiter Code mit der Sendung assoziiert oder für die Sendung bestimmbar oder abrufbar ist.

11. Verfahren nach Anspruch 10, wobei die erste Information zumindest die Zustellungszustimmungsinformation in Form des ersten Codes umfasst und aus dem ersten Code folgt oder ableitbar ist, dass eine Person der Zustellung der Sendung trotz Abwesenheit der Person zustimmt, wenn der erste Code gemäß einer vordefinierten Vorschrift zu dem zweiten Code korrespondiert, insbesondere damit übereinstimmt, oder wobei die erste Information zumindest die Bezahlt-Information in Form des ersten Codes umfasst und aus dem ersten Code folgt oder ableitbar ist, dass eine Bezahlung der Ware, die in der Sendung enthalten ist, erfolgt ist, wenn der erste Code gemäß einer vordefinierten Vorschrift zu dem zweiten Code korrespondiert, insbesondere damit übereinstimmt.

12. Verfahren nach einem der Ansprüche 10-11, wobei der zweite Code auf die Sendung oder ein Etikett auf der Sendung gedruckt, in einem mit der Sendung verbundenen oder darin enthaltenen Speicherelement auslesbar gespeichert, in einem Gerät des Zustellers gespeichert und dort anhand von Informationen der Sendung, insbesondere einer Kennung der Sendung, identifizierbar oder in einem Server gespeichert oder von diesem erzeugbar und mittels eines Geräts des Zustellers von dem Server anhand von Informationen der Sendung, insbesondere einer Kennung der Sendung, abrufbar ist.

13. Verfahren nach einem der vorhergehenden Ansprüche, soweit auf Anspruch 1 rückbezogen, ferner umfassend:
- Erhalten oder Erfassen dritter Information durch einen Zusteller oder ein Gerät des Zustellers, wobei aus der dritten Information folgt oder ableitbar ist, in welcher Form die Zustellung der Sendung bei Abwesenheit der Person erfolgen darf.

14. Vorrichtung oder System, das mehrere Vorrichtungen umfasst, wobei die Vorrichtung(en) eingerichtet ist/sind zur Ausführung und/oder Steuerung des Verfahrens nach einem der Ansprüche 1-13 oder Mittel zur Ausführung und/oder Steuerung der Schritte des Verfahrens nach einem der Ansprüche 1-13 aufweist/aufweisen.

15. Computerprogramm, umfassend Programmanweisungen, die einen Prozessor zur Ausführung und/oder Steuerung des Verfahrens gemäß einem der Ansprüche 1-13 veranlassen, wenn das Computerprogramm auf dem Prozessor läuft.
